# EUROPEAN PATENT SPECIFICATION

(11) **EP 4 575 262 B1**
(45) Date of publication and mention of the grant of the patent: **07.10.2026**
(21) Application number: 23885935.9
(22) Date of filing: 29.06.2023
(51) Int. Cl.: B60G 13/08, F03B 13/00, F03G 7/08, F16F 9/46

(54) **DIGITALLY CONTROLLED SHOCK ABSORBER AND GENERATOR-EMBEDDED VARIABLE-DAMPING VALVE ASSEMBLY THEREFOR**
DIGITAL GESTEUERTER STOSSDÄMPFER UND GENERATORINTEGRIERTE VARIABLE DÄMPFUNGSVENTILANORDNUNG DAFÜR
AMORTISSEUR À COMMANDE NUMÉRIQUE ET ENSEMBLE SOUPAPE D'AMORTISSEMENT VARIABLE INTÉGRÉ À UN GÉNÉRATEUR ASSOCIÉ

(30) Priority: 01.11.2022 KR 20220143365
(43) Date of publication of application: 25.06.2025
(73) Proprietor: Ingage, Pyeongtaek-si Gyeonggi-do 17796 (KR)
(72) Inventor: SHIM, Do Sik, Osan-si Gyeonggi-do 18146 (KR)
(74) Representative: Nederlandsch Octrooibureau
(86) International application number: PCT/KR2023/009091
(87) International publication number: WO 2024/096238

(56) References cited:
- JP-A- 2012 247 055
- KR-A- 20130 052 788
- KR-A- 20180 106 202
- KR-A- 20220 104 463
- KR-B1- 102 518 343
- US-A1- 2014 190 156

## Description

### TECHNICAL FIELD

The present invention relates to a shock absorber, more particularly to a generator-integrated variable-damping valve assembly that is equipped with a power generator to self-generate the power needed for controlling the valve assembly and a digitally controlled shock absorber that uses such a valve assembly.

### BACKGROUND ART

A shock absorber is a component of a vehicle's suspension system and is generally installed between the vehicle body and the axle to dampen shocks caused by the vehicle's movement. Shock absorbers not only improve ride comfort but also reduce tire wear and allow the vehicle to maintain a safe amount of contact area between the tires and the road for improved braking power and easier steering.

Shock absorbers are especially meaningful in the context of autonomous vehicles. As various levels of autonomous vehicles are developed, the interior of a vehicle is gradually transforming from a space for controlling the driving to a space for relaxing while the vehicle is driven autonomously. Since the passengers in an autonomous vehicle are likely not to actively monitor road conditions or control the vehicle, even slight impacts can cause great discomfort.

Designing the damping force provided by a shock absorber requires careful consideration, as a great damping force is generally required in terms of ensuring driving safety and shortening braking distances, while a small damping force is generally desirable in terms of increasing ride comfort.

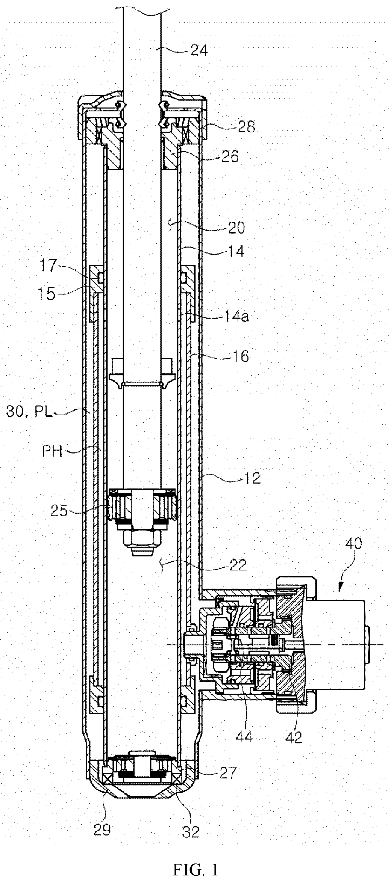

To address this issue, the variable-damping valve has been developed, which can vary the damping force provided by the shock absorber. FIG. 1 illustrates a conventional shock absorber. The conventional variable-damping shock absorber includes a base shell 12, an inner tube 14, and a separator tube 16, with a piston rod 24 installed within the inner tube 14 such that the piston rod 24 is movable along the longitudinal direction. A body valve 27 is installed at the lower end of the inner tube 14 and base shell 12, while a piston valve 25 is installed on the piston rod 24. The space inside the inner tube 14 is divided into a rebound chamber 20 above the piston valve 25 and a compression chamber 22 below the piston valve 25. A low-pressure chamber PL is formed as a reservoir chamber on the inside of the base shell 12, while a high-pressure chamber PH is formed on the inside of the separator tube 16.

When a force is applied to the piston rod 24 to push it down, the piston rod 24 moves downward within the inner tube 14, causing the fluid in the compression chamber 22 to flow through the piston valve 25 into the rebound chamber 20, then through an internal hole 14a formed in the inner tube 14 into the high-pressure chamber PH, and finally into a variable-damping valve assembly 40 that is mounted on one side of the base shell 12. When the piston rod 24 moves up again, the fluid in the low-pressure chamber PL is moved into the compression chamber 22 through a lower passage 32 formed in the body valve 27, and the fluid in the rebound chamber 20 flows into the high-pressure chamber PH through the internal hole 14a to enter the variable-damping valve assembly.

The variable-damping valve assembly 40 includes a spool 44 that is moved by the operation of an actuator 42. The movement of the spool 44 alters the passage between the high-pressure chamber PH and low-pressure chamber PL, thereby adjusting the damping force of the shock absorber. When the variable-damping valve assembly shown in FIG. 1 is operated in a particular mode, the actuator 42 continuously applies a force to keep the spool 44 in a particular position, and when this mode is deactivated, the actuator 42 stops applying the force, allowing the spool 44 to be returned to its original position by way of a spring, etc.

As such, the conventional shock absorber includes a complicated configuration, which becomes even more complicated as cables for supplying power and circuits and wires for transmitting sensor signals or control signals are added to the variable-damping valve assembly 40. Even if the variable-damping valve assembly 40 is operated on battery power instead of being connected to an external power source, the continuous power consumption of the actuator 42 during operation necessitates a corresponding battery capacity, which increases the size and requires frequent maintenance for recharging, etc. Document KR20180106202A discloses a relevant bi-tubular damper according to the pre-amble of claim 1.

### DETAILED DESCRIPTION OF THE INVENTION

### Technical Problem

An aspect of the present invention, which was conceived to resolve the problems described above, is to provide a generator-integrated variable-damping valve assembly and a digitally controlled shock absorber in which the control unit communicates wirelessly with the vehicle's control unit and the valve assembly self-generates the power needed for the operation of the control unit.

Another aspect of the invention is to provide a generator-integrated variable-damping valve assembly and a digitally controlled shock absorber that can minimize the power needed for controlling the shock absorber's damping force and can thus reduce the size of the generator and battery, so that the overall size of the valve assembly may be kept small and the shock absorber may be assembled and installed more conveniently.

Yet another aspect of the invention is to provide a generator-integrated variable-damping valve assembly and a digitally controlled shock absorber that can provide superior damping control performance and high durability.

Other objectives of the present invention will be more clearly understood from the embodiments set forth below.

### Technical Solution

A generator-integrated variable-damping valve assembly according to an aspect of the invention, which is a valve assembly for mounting on a shock absorber, can include: a housing, in which a valve chamber and a control chamber are defined, and which includes a partition wall for separating the valve chamber from the control chamber, where the valve chamber has an opening on one side thereof; a main valve body, which is arranged within the valve chamber to partition a back-pressure chamber on the other side of the valve chamber, and in which are formed an inlet channel, an auxiliary channel, and an outlet channel that communicate with the back-pressure chamber; a main disk spring, which is elastically deformable and is arranged to cover the inlet channel, where the main disk spring is configured to open the inlet channel by being elastically deformed in accordance to a pressure difference between the inlet channel and the back-pressure chamber; a back-pressure chamber body, which is arranged between the main valve body and the partition wall, and in which is formed a bypass channel that communicates with the back-pressure chamber; a control valve, which is coupled to the back-pressure chamber body to control the degree of opening of the bypass channel; a connector body, which is coupled to one side of the main valve body, and a portion of which is positioned at the opening to partition the opening into an inlet communicating with the inlet channel and an outlet communicating with the outlet channel; an impeller, which is arranged on one side of the main valve body and configured to be rotated by a flow of fluid; a shaft, which has one side connected to the impeller and is arranged to pass through a central hole formed in the main valve body and a through-hole formed in the partition wall; a generator, which is arranged within the control chamber and coupled to an other side of the shaft, and which generates electricity by way of a rotation of the impeller; and a control unit, which includes an actuator for manipulating the control valve, where the control unit can be driven by power generated by the generator or by power provided from a battery charged by the generator.

### Advantageous Effects

An embodiment of the present invention having the features above can provide various advantageous effects including the following. However, an embodiment of the present invention may not necessarily exhibit all of the effects below.

A generator-integrated variable-damping valve assembly according to an embodiment of the invention can communicate wirelessly with the outside, does not continuously consume power, and can charge a battery using the movement of the fluid itself that occurs during the use of the shock absorber. As a result, the valve assembly and the shock absorber mounted with the valve assembly can be installed very easily, as they occupy a very small volume of space and do not need to be connected with the control unit or various sensors of the vehicle.

Also, whereas the related art involves first welding a portion of the valve assembly 40 to a side surface of the shock absorber and then assembling and installing the remaining parts, the compact size of the valve assembly associated with an embodiment of the invention makes it possible to first assemble the valve assembly and then couple the valve assembly onto its designated position on the shock absorber. This means that the manufacture and assembly of the shock absorber can be more readily automated, which in turn provides increased production yields and lower defect rates.

A generator-integrated variable-damping valve assembly according to an embodiment of the invention can protect the generator or piezoelectric stack from being subject to excessive forces, can increase the durability of the main valve body, and can increase the sealing performance of the back-pressure chamber. These features can increase the life spans and lower the maintenance costs of the valve assembly and the shock absorber equipped with the valve assembly.

### BRIEF DESCRIPTION OF DRAWINGS

FIG. 1 is a cross-sectional view illustrating a shock absorber according to the related art.
FIG. 2A and FIG. 2B illustrate a digitally controlled shock absorber according to an embodiment of the invention.
FIG. 3A, FIG. 3B, and FIG. 3C illustrate the rod guide and the oil seal in the digitally controlled shock absorber shown in FIGs. 2A and 2B.
FIG. 4 is a side view illustrating the other side of a generator-integrated variable-damping valve assembly according to a first disclosed embodiment of the invention.
FIG. 5 is a cross-sectional view illustrating a generator-integrated variable-damping valve assembly according to the first disclosed embodiment of the invention.
FIG. 6A and FIG. 6B are cross-sectional views illustrating the flow paths of the fluid when the control valve in FIG. 5 is closed and open.
FIG. 7A and FIG. 7B illustrate the control valve in the generator-integrated variable-damping valve assembly shown in FIG. 5.
FIG. 8A, FIG. 8B, FIG. 8C, FIG. 8D, FIG. 8E, and FIG. 8F illustrate the operation of the control valve shown in FIGs. 7A and 7B.
FIG. 9A and FIG. 9B illustrate the guide in the generator-integrated variable-damping valve assembly shown in FIG. 5.
FIG. 10A, FIG. 10B, and FIG. 10C illustrate the impeller in the generator-integrated variable-damping valve assembly shown in FIG. 5.
FIG. 11A, FIG. 11B, FIG. 11C, and FIG. 11D illustrate the protective disk and the main disk spring in the generator-integrated variable-damping valve assembly shown in FIG. 5.
FIG. 12 is a cross-sectional view illustrating a generator-integrated variable-damping valve assembly according to a second disclosed embodiment of the invention.
FIG. 13A and FIG. 13B illustrate the connector body in the generator-integrated variable-damping valve assembly shown in FIG. 12.
FIG. 14 is a cross-sectional view illustrating a generator-integrated variable-damping valve assembly according to a third disclosed embodiment of the invention.
FIG. 15A, FIG. 15B, and FIG. 15C illustrate the operation of the control valve in the generator-integrated variable-damping valve assembly shown in FIG. 14.

### MODE FOR CARRYING OUT THE INVENTION

As the invention allows for various changes and numerous embodiments, particular embodiments will be illustrated in the drawings and described in detail in the written description. However, this is not intended to limit the present invention to particular modes of practice, and it is to be appreciated that all changes, equivalents, and substitutes that do not depart from the technical scope of the present invention are encompassed by the present invention. In the description of the present invention, certain detailed explanations of the related art are omitted if it is deemed that they may unnecessarily obscure the essence of the invention.

The terms used in the present specification are merely used to describe particular embodiments and are not intended to limit the present invention. An expression used in the singular encompasses the expression of the plural, unless it has a clearly different meaning in the context. In the present specification, it is to be understood that terms such as "including" or "having," etc., are intended to indicate the existence of the features, numbers, steps, actions, components, parts, or combinations thereof disclosed in the specification and are not intended to preclude the possibility that one or more other features, numbers, steps, actions, components, parts, or combinations thereof may exist or may be added.

While such terms as "first" and "second," etc., can be used to describe various components, such components are not to be limited by the above terms. The above terms are used only to distinguish one component from another.

Certain embodiments of the present invention will be described below in more detail with reference to the accompanying drawings. Those components that are the same or are in correspondence are rendered the same reference numeral, and redundant descriptions are omitted.

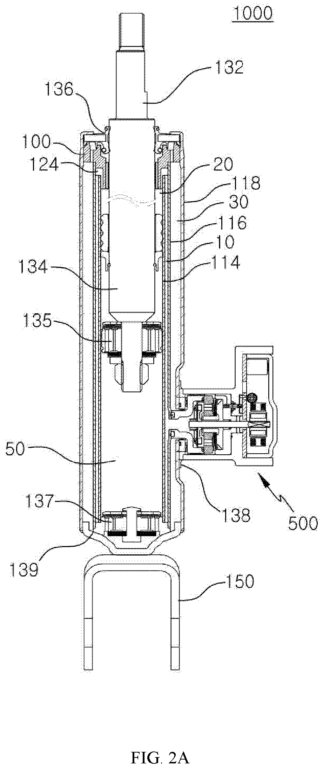

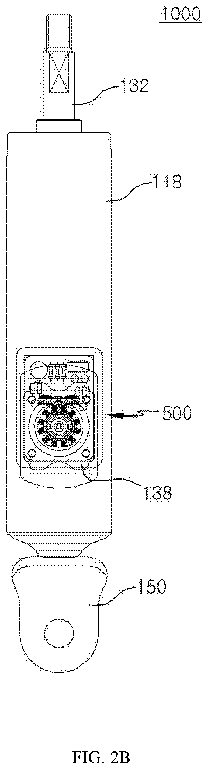

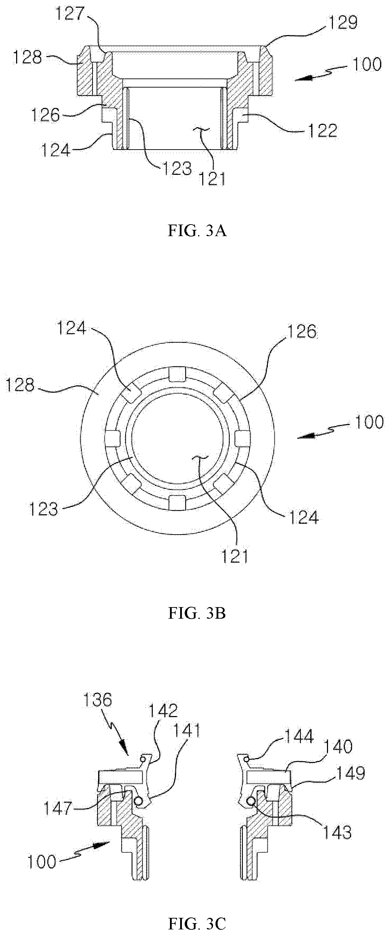

FIGs. 2A and 2B illustrate a digitally controlled shock absorber 1000 according to an embodiment of the invention, where FIG. 2A is a cross-sectional view from a front of the shock absorber 1000, and FIG. 2B is an elevational view from a side of the shock absorber 1000. FIGs. 3A to 3C illustrate the rod guide 100 and the oil seal 136 in the digitally controlled shock absorber 1000 shown in FIGs. 2A and 2B.

Referring to FIGs. 2A and 2B, a digitally controlled shock absorber 1000 according to the first disclosed embodiment of the invention can include an inner tube 114, a middle tube 116, a base tube 118, an absorber rod 134, a piston valve 135, and a body valve 137. The piston valve 135 can be mounted on the absorber rod 134. Also, the inner tube 114, middle tube 116, and base tube 118 can have a rod guide 100 and an oil seal 136 mounted at the top and the body valve 137 and a lower cap 139 mounted at the bottom.

The absorber rod 134 and the piston valve 135 can be placed inside the inner tube 114, the inner tube 114 can be placed inside the middle tube 116, and the middle tube 116 can be placed inside the base tube 118. The space within the inner tube 114 may be divided with respect to the piston valve 135 into the rebound chamber 20 above and the compression chamber 50 below. The space between the base tube 118 and the middle tube 116 can form a low-pressure chamber 30, and the space between the middle tube 116 and the inner tube 114 can form a high-pressure chamber 10.

A generator-integrated variable-damping valve assembly according to an embodiment of the invention can be mounted on the side surface of the base tube 118. Thus, unlike the remaining portions of the base tube 118 that form a generally cylindrical shape, at least a portion of the base tube 118 can have a flat shape, and the coupling flange 138 of the inner cover 518 of the valve assembly can be coupled to this portion.

While FIGs. 2A and 2B illustrate the shock absorber 1000 mounted with a valve assembly 500 according to the first disclosed embodiment of the invention, it is to be appreciated that the shock absorber 1000 can be mounted with a valve assembly 500, 800, 900 according to another embodiment of the invention and that a valve assembly according to still another embodiment of the invention can include features that are compatible with a valve assembly 500, 800, 900 according to the first to third disclosed embodiments. Although the descriptions below may use a valve assembly 500 based on the first disclosed embodiment of the invention as an example, the descriptions can also apply to a valve assembly 800, 900 based on another embodiment.

The fluid of the shock absorber 1000 can enter and exit through an inlet 110 and an outlet 130 formed in one side of the valve assembly 500. The valve assembly 500 can be installed such that the inlet 110 is in communication with the high-pressure chamber 10 and the outlet 130 is in communication with the low-pressure chamber 30. The valve assembly 500 can adjust the damping force of the shock absorber 1000 by adjusting the resistance to the flow of fluid flowing therein. That is, when the shaft 132 at the top of the absorber rod 134 and the coupling part 150 at the bottom of the lower cap 139 are coupled to the body and the axle of a vehicle, the impact on the vehicle body in relation to the vehicle axle is absorbed by the movement of the absorber rod 134 that moves up and down against the resistance of the fluid. Here, the valve assembly 500 adjusts the damping force by adjusting the resistance of the fluid and thus adjusting the resistance applied against the movement of the absorber rod 134.

A shock absorber 1000 according to an embodiment of the invention may be structured to allow an easier manufacture and assembly of the inner tube 114, middle tube 116, and base tube 118. For example, a protrusion can be formed on the lower cap 139 that protrudes to surround the body valve 137, and one or more curbs can be formed on the protrusion. In the embodiment illustrated in FIGs. 2A and 2B, two curbs are formed on the lower cap 139, with the inner tube 114 arranged on one curb and the middle tube 116 arranged on the other curb. The base tube 118 is coupled to the outer perimeter of the lower cap 139.

The protrusion on the lower cap 139 having curbs formed thereon can be configured to seal the bottom of the inner tube 114, seal the bottom of the middle tube 116, and allow fluid to flow only through the body valve 137 as necessary. Such a structure can provide the sealing necessary for the high-pressure chamber 10 and the compression chamber 50 while at the same time making it easier to manufacture and assemble the inner tube 114 and the middle tube 116, since the lower ends of the inner tube 114 and the middle tube 116 can maintain a very simple shape, and it is possible to align the inner tube 114 and the middle tube 116 in their correct positions simply by placing the inner tube 114 and middle tube 116 on the curbs of the lower cap 139.

FIGs. 3A to 3C illustrate the rod guide and the oil seal in the digitally controlled shock absorber shown in FIGs. 2A and 2B, where FIG. 3A is a cross-sectional view of the rod guide 100, FIG. 3B is a bottom view of the rod guide 100, and FIG. 3C is a cross-sectional view of the rod guide 100 coupled with the oil seal 136.

The rod guide 100 can include an upper support portion 128, which may have an outer diameter corresponding to the inner diameter of the base tube 118; a lower support portion 123, which may extend downward from a lower portion of the rod guide 100 with an outer diameter corresponding to the inner diameter of the inner tube 114, and which may be shaped as a hollow cylinder with a center hole 121 formed in the middle; and a curb portion 126, which may be formed between the upper support portion 128 and the lower support portion 123. In the example illustrated in FIGs. 3A to 3C, there are two curbs formed in the rod guide 100 as well, due to the curb portion 126. As illustrated in FIG. 3B, one or more flow grooves 124 can be formed in the lower support portion 123 and the curb portion 126.

Similarly to the lower cap 139, for the rod guide 100 also, the inner tube 114 can be coupled to a curb, the middle tube 116 can be coupled to another curb, and the base tube 118 can be coupled to the upper support portion 128 forming the outer perimeter of the rod guide 100. Whereas the high-pressure chamber 10 needs to be isolated from the compression chamber 50 formed in the lower portion of the inner tube 114, so that the lower cap 139 may seal the lower end of the middle tube 116, the high-pressure chamber 10 should be in communication with the rebound chamber 20 formed in the upper portion of the inner tube 114. To this end, the conventional assembly involved processing an inner hole 14a in the separator tube 16, as illustrated in FIG. 1.

When using a rod guide 100 according to an embodiment of the invention, however, the procedure of mounting a guide ring 15 for securing the upper portion of the separator tube 16 to the inner tube 14 and a separate O-ring 17 for sealing the corresponding portion can be omitted, and the procedure of processing an inner hole 14a into the separator tube 16 can likewise be omitted. According to an embodiment of the invention, the necessary structure can be completed by simply coupling the upper end of the middle tube 116 in tight contact with the outer perimeter of the curb portion 126 and coupling the upper end of the inner tube 114 in tight contact with the outer perimeter of the lower support portion 123. The flow grooves 124 formed in the lower support portion 123 and the curb portion 126 naturally form flow passages between the high-pressure chamber 10 and the rebound chamber 20, so that there is no need for processing an inner hole 14a as in the related art. This can prevent defects that may otherwise easily occur during procedures for processing holes in materials.

Protrusions 127, 129 can be formed in annular shapes at the top of the upper support portion 128. The protrusions 127, 129 can press against the oil seal 136 that is coupled onto the top of the rod guide 100 and increase watertightness at the necessary portions.

Referring to FIG. 2A and FIG. 3C, the oil seal 136 can be coupled to an upper portion of the rod guide 100. The oil seal 136 can include a ring core 140 that is made from a material having a comparatively high strength, while the remaining portions can be made from a comparatively flexible material to provide a high sealing ability. Protrusions 147, 149 can protrude downward at a lower portion of the oil seal 136, and these can press against the protrusions 127, 129 of the rod guide 100 to block any fluid from passing.

Sealing sleeves 141, 142 can protrude from an upper portion and a lower portion of the oil seal 136. The sealing sleeves 141, 142 can press against the absorber rod 134 that passes through the center hole 121 of the rod guide 100 in a manner that permits the movement of the absorber rod 134 but prevents the fluid within the inner tube 114 from leaking out. Sealing rings 143, 144 having annular shapes can be added to the sealing sleeves 141, 142, so that the sealing sleeves 141, 142 may more strongly press against the outer perimeter of the absorber rod 134.

As presented above, a shock absorber 1000 according to an embodiment of the invention can be easily assembled by simply coupling the body valve 137 and lower cap 139 and the rod guide 100 and oil seal 136 onto the inner tube 114, middle tube 116, and base tube 118. Since the guide ring 15 and the O-ring 17 required in the relevant art can be omitted, and since there is no need to process an inner hole 14a into the middle tube 116, the manufacture and assembly of the shock absorber 1000 can be performed with simpler procedures.

The following provides a more detailed description of a generator-integrated variable-damping valve assembly according to certain embodiments of the invention.

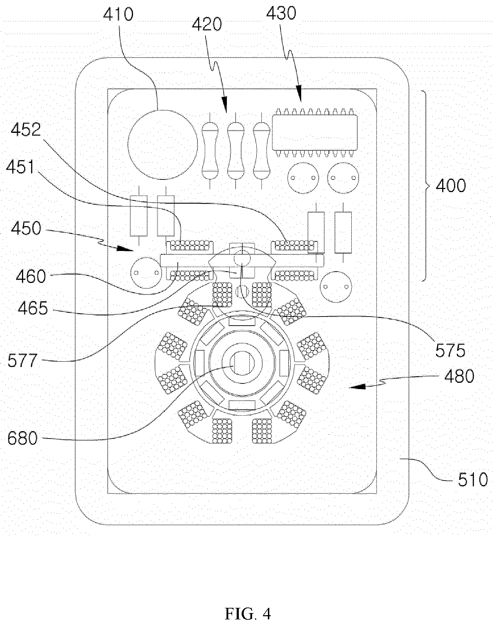

FIG. 4 is a side view illustrating the other side of a generator-integrated variable-damping valve assembly 500 according to a first disclosed embodiment of the invention, where the outer cover 512 of the housing 510 has been removed. For convenience, the direction in which the inlet 110 is formed in the valve assembly is referred to in the present specification as "one side", and the opposite direction is referred to as the "other side". Of course, the terms "one side" and "other side" can refer to different directions depending on the object being described and the context.

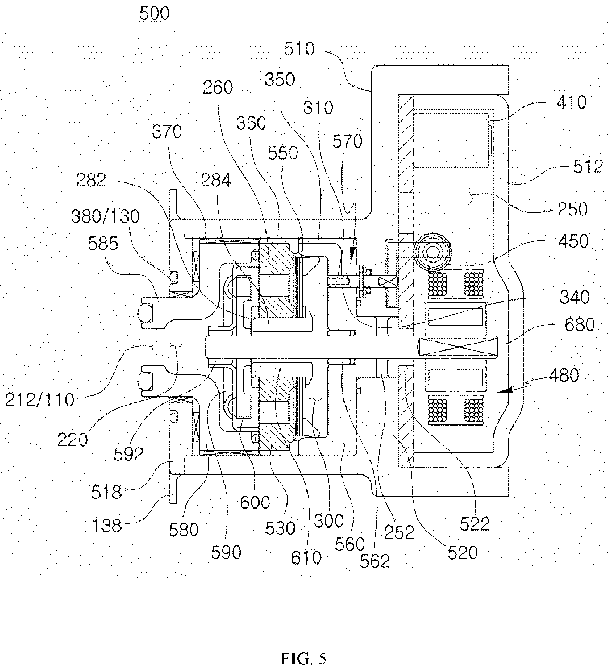

Referring to FIG. 4, in a generator-integrated variable-damping valve assembly 500 based on the first disclosed embodiment of the invention, a control unit 400 and a generator 480 can be housed in the control space 250 (see FIG. 5).

The control unit 400 can be the part that controls the overall operation of the valve assembly 500 and can include a battery 410, a communication unit 420, a circuit part 430, and an actuator 450.

The battery 410 can be configured to store the electrical power needed for the operation of the control unit 400 and can be charged by the generator 480 described further below. The other components of the control unit 400 can be operated by the power stored in the battery 410.

The communication unit 420 can correspond to the part that allows the control unit 400 to communicate with an entity outside the valve assembly 500. The communication unit 420 can communicate with an outside entity wirelessly, for example via Bluetooth, Wi-fi, etc. Through the communication unit 420, the control unit 400 can communicate, for example, with the central processing unit of the vehicle on which the shock absorber 1000 is installed, a navigation device, sensors installed on various locations of the vehicle, the user's smart phone, an outside device installed on particular locations on the road (for instance, a peripheral device on a traffic light, etc.), and the like.

The circuit part 430 can correspond to the main part of the control unit 400 and can perform computations associated with the operation of the valve assembly 500. For example, after receiving information through the communication unit 420, the circuit part 430 can determine the damping force required of the shock absorber 1000 and can control the actuator 450 such that the required damping force is provided.

The actuator 450 may be the part that controls the control valve 570 described further below. As described later on, the valve assembly 500 can adjust the resistance of the fluid applied on the absorber rod 134 of the shock absorber 1000 by adjusting the pressure in the back-pressure chamber 300, and the control valve 570 can serve to adjust the pressure in the back-pressure chamber 300. The actuator 450 can manipulate the control valve 570, thereby changing the damping force of the shock absorber 1000. A more detailed description of the operations of the actuator 450 and the control valve 570 is provided further below.

The generator 480 can provide power to the control unit 400 and, more specifically, can charge the battery 410 of the control unit 400. The other end of the shaft 680, which is coupled to the impeller 600 described further below, can be coupled to the generator 480. When the movement of the fluid within the valve assembly 500 rotates the impeller 600, the rotation of the shaft 680 coupled to the impeller 600 can operate the generator 480 to generate electricity. Reference to the shaft 680 being coupled to the generator 480 would be readily understood by the person skilled in the art as meaning that the shaft 680 is coupled to the rotor part of the generator and that the rotation of the shaft 680 causes the rotor of the generator 480 to rotate and thus produce electricity by way of the interaction with the stator of the generator 480. While FIG. 4 illustrates a generator 480 that produces electricity based on a rotating mechanism, it is possible in certain other embodiments for the generator 480 to be implemented in the form of a piezoelectric stack 485 that produces electricity based on a pressing mechanism.

FIG. 5 is a cross-sectional view illustrating a generator-integrated variable-damping valve assembly 500 according to the first disclosed embodiment of the invention. Referring to FIG. 5, a valve assembly 500 according to this embodiment can further include a housing 510, a main valve body 530, a protective disk 540, a main disk spring 550, a back-pressure chamber body 560, a control valve 570, a connector body 580, a guide 590, an impeller 600, a passage member 610, and a shaft 680, in addition to the components described above with reference to FIG. 4.

Th housing 510 can form the exterior of the valve assembly 500 and can provide a space in which to install the other components. The housing 510 can be provided with a partition wall 520 in which a through-hole 252 is formed, with a valve space formed on one side of the partition wall 520 and the control space 250 formed on the other side. The valve space is not assigned a separate reference number in the drawings so as to avoid unnecessary confusion, but in the embodiment shown in FIG. 5, the space between the inner cover 518 and the partition wall 520 can correspond to the valve space. An opening can be formed in one side of the housing 510, and the valve space can thus be open in one side through the opening. The opening of the housing 510 can be used to form the inlet 110 and outlet 130 of the valve assembly 500.

For instance, in the example shown in FIG. 5, the inner cover 518 is coupled to the opening of the housing 510, and a connector tube 585, which is a part of the connector body 580, is inserted through a center hole 380 of the inner cover 518. Here, a connector channel 212 on the inner side of the connector tube 585 forms the inlet 110, and the gap between the outer perimeter of the connector tube 585 and the inner perimeter of the center hole 380 in the inner cover 518 forms the outlet 130. Of course, in other embodiments, the shapes, positions, and sizes of the inlet 110 and outlet 130 can be configured differently.

The main valve body 530 can be arranged within the valve space but at a distance from the partition wall 520 of the housing 510 so as to define a back-pressure chamber 300 on the other side of the main valve body 530. An inlet channel 260, an auxiliary channel, and an outlet channel 360 that connect the one side with the other side of the valve space can be formed in the main valve body 530.

Also, a center hole can be formed in the center of the main valve body 530 through which the shaft 680 may pass. In cases where the center hole of the main valve body 530 has an inner diameter that is greater than the outer diameter of the shaft 680, the gap between the inner perimeter of the center hole and the outer perimeter of the shaft 680 can serve as an auxiliary channel. In the example illustrated in FIG. 5, a passage member 610 is mounted in the center hole of the main valve body 530, the center hole 284 of the passage member 610 has an inner diameter that is greater than the outer diameter of the shaft 680, and the gap between the inner perimeter of the center hole 284 of the passage member 610 and the outer perimeter of the shaft 680 serves as an auxiliary channel.

In the example shown in FIG. 5, the inlet channel 260 is implemented in a form that penetrates through the main valve body 530, and the outlet channel 360 is implemented in a form that is defined by grooves formed in the outer perimeter of the main valve body 530 and the inner perimeter of the housing 510. Of course, in different embodiments, the shapes, positions, and sizes of the inlet channel 260, auxiliary channel, and outlet channel 360 can be configured differently.

The protective disk 540 can be coupled to the other side of the main valve body 530 and serve to reinforce the main valve body 530. To this end, the protective disk 540 can be formed from a material having a greater strength than that of the main valve body 530. In certain embodiments, the protective disk 540 can be omitted.

The main disk spring 550 can be configured such that at least a portion of the main disk spring 550 is elastically deformable. The main disk spring 550 can be arranged on the other side of the protective disk 540 or, in cases where the protective disk 540 is omitted, on the other side of the main valve body 530 so as to cover the inlet channel 260 of the main valve body 530. Every time the shock absorber 1000 absorbs an impact, the fluid entering the valve assembly 500 can open the main disk spring 550 and pass through. Here, since the main disk spring 550 is positioned at the other side of the main valve body 530 and faces the back-pressure chamber 300, the force required by the fluid for opening the main disk spring 550 that is keeping the inlet channel 260 closed may vary depending on the internal pressure of the back-pressure chamber 300. The valve assembly 500 can thus adjust the damping force of the shock absorber 1000 by adjusting the pressure of the back-pressure chamber 300.

The back-pressure chamber body 560 can be arranged between the main valve body 530 and the partition wall 520, and a bypass channel 350 that is in communication with the back-pressure chamber 300 can be formed in the back-pressure chamber body 560. A control valve 570 can be mounted in the bypass channel 350, and the control valve 570 can control the degree of opening of the bypass channel 350. A more detailed description of the operation of the control valve 570 is provided further below.

The connector body 580 can be coupled to one side of the main valve body 530. The connector body 580 can form a holding space 220 therein, and the holding space 220 can be open at one side. As a result, channels that are isolated from each other can be formed on the inner side and the outer side of the connector body 580, and these channels can be used as the inlet 110 and the outlet 130 for the valve assembly 500. In the example illustrated in FIG. 5, the connector body 580 includes a connector tube 585 that has a relatively smaller outer diameter; the connector tube 585 is inserted through the center hole 380 of the inner cover 518; the connector channel 212 on the inner side of the connector tube 585 forms the inlet 110; and the gap between the outer perimeter of the connector tube 585 and the inner perimeter of the center hole 380 in the inner cover 518 forms the outlet 130.

The guide 590 can be arranged on one side of the main valve body 530 within the holding space 220 on the inner side of the connector body 580 and can be coupled to at least one of the housing 510, main valve body 530, and connector body 580. The guide 590 can help form a helical flow in the fluid that has entered through the inlet 110 before the fluid passes through the impeller 600. In certain embodiments, the guide 590 can be omitted.

The impeller 600 can be arranged on one side of the main valve body 530 and can be configured to be rotated by the fluid passing through. The impeller 600 can be coupled to the shaft 680, and as the impeller 600 is rotated, the shaft 680 can be rotated together as well. As described above, the rotation of the shaft 680 can drive the generator 480, which is arranged in the control space 250, to produce electricity.

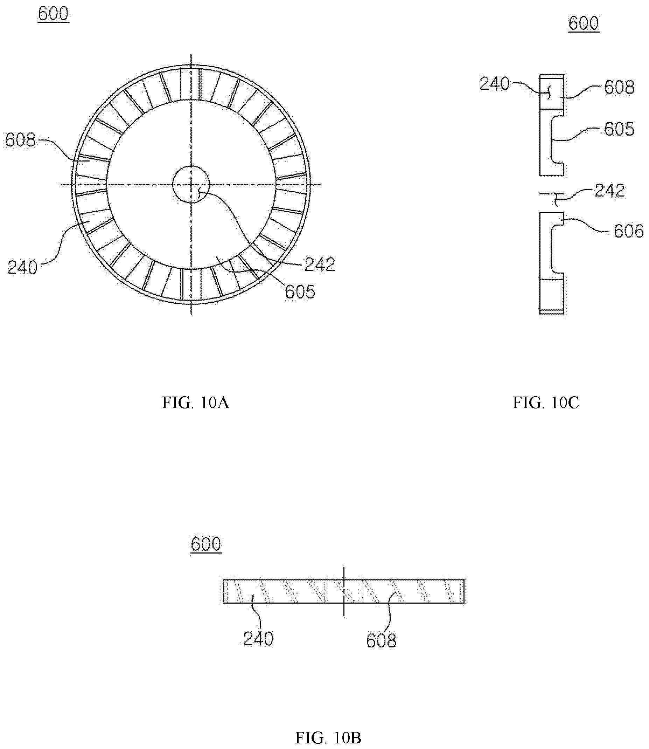

The passage member 610 can be mounted in the center hole of the main valve body 530 and can itself have a hollow shape with a center hole 284. The passage member 610 can be mounted in the center hole of the main valve body 530 to couple the main valve body 530, the protective disk 540, and the main disk spring 550 to one another from the middle. Also, the center hole 284 of the passage member 610 can have an inner diameter that is greater than the outer diameter of the shaft 680, so that the center hole 284 may serve as an auxiliary channel for the main valve body 530. More specifically, a multiple number of flow grooves 282 can be formed in one end of the passage member 610 to connect the holding space 220 with the auxiliary channel 284. This structure prevents the auxiliary channel 284 from being blocked, even if a protrusion 606 (see FIG. 10C) of the impeller 600 contacts the passage member 610. In certain embodiments, there may not be a separate passage member 610 included, and in certain embodiments, the passage member 610 can be implemented in a form that is integrated as a single body with at least one of the main valve body 530, the protective disk 540, and the main disk spring 550.

The shaft 680 can be coupled to the impeller 600 to rotate together when the impeller 600 is rotated and can transmit the rotational force to the generator 480 to aid the generator 480 in producing electricity. As such, the shaft 680 may be coupled to the impeller 600 within the valve space and coupled to the generator 480 within the control space 250. In the example illustrated in FIG. 5, the shaft 680 passes through the center hole 284 of the passage member 610, the through-hole of the back-pressure chamber body 560, and the through-hole 252 of the partition wall 520. The center hole 284 of the passage member 610 may be used as an auxiliary channel and thus may not require sealing, but sealing may be needed for the through-hole of the back-pressure chamber body 560 and the through-hole 252 of the partition wall 520. To this end, sealing members such as O-rings, etc., can be added to the portion where the shaft 680 passes through the back-pressure chamber body 560 and the contact portion between the partition wall 520 and the back-pressure chamber body 560, and a portion of the back-pressure chamber body 560 can be inserted in the through-hole 252 of the partition wall 520.

A bearing 562 for rotatably supporting the shaft 680 can be mounted in the through-hole of the back-pressure chamber body 560, and a sealing member such as an O-ring, etc., can be installed on the other side of the bearing 562. A bearing 522 for rotatably supporting the shaft 680 can also be mounted in the through-hole 252 in the partition wall 520 of the housing 510. A bearing 592 can be provided on the guide 590 at one end of the shaft 680 to rotatably support the shaft 680. In cases where the guide 590 is omitted, the shaft 680 can be supported on the connector body 580 by way of a bearing or can be configured to rotate freely without being supported by another component.

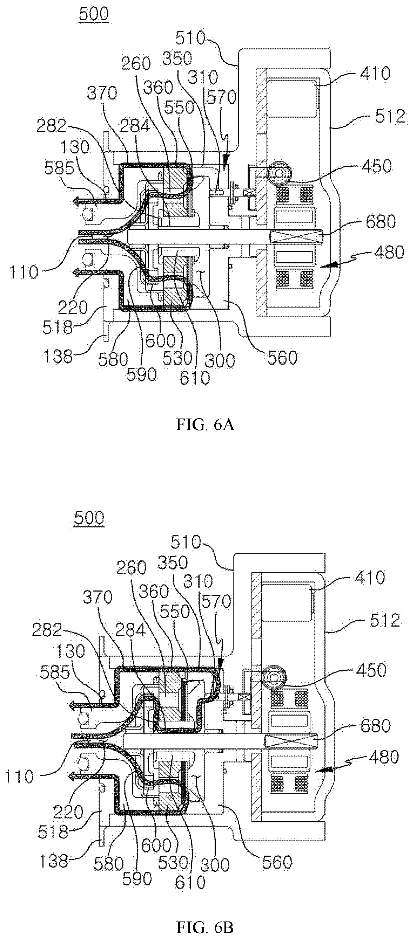

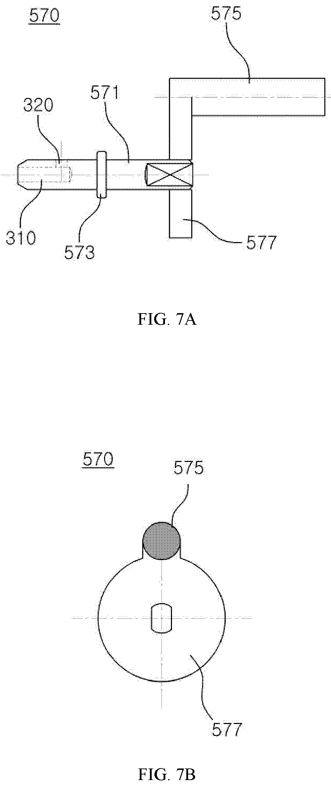

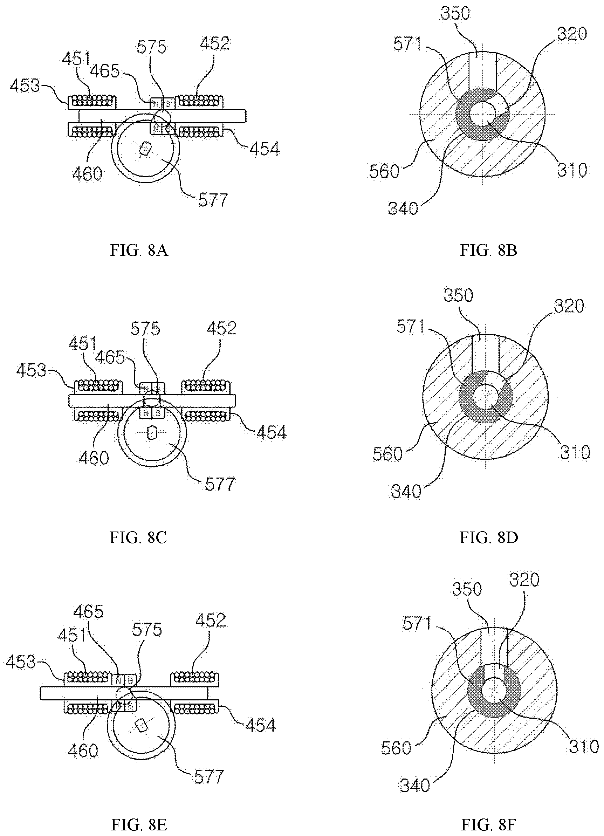

A more detailed description is provided below of a method of operating a generator-integrated variable-damping valve assembly 500 according to the first disclosed embodiment of the invention. FIGs. 6A and 6B are cross-sectional views illustrating the flow paths of the fluid when the control valve 570 in FIG. 5 is closed and open, FIGs. 7A and 7B illustrate the control valve 570 in the generator-integrated variable-damping valve assembly 500 shown in FIG. 5, and FIGs. 8A to 8F illustrate the operation of the control valve 570 shown in FIGs. 7A and 7B.

FIG. 6A illustrates the flow of fluid when the control valve 570 is closed in the valve assembly 500, while FIG. 6B illustrates the flow of fluid when the control valve 570 is open in the valve assembly 500.

Referring to FIG. 6A, in which the control valve 570 has closed the bypass channel 350 completely, the shock absorber 1000 is operated, and the fluid in the high-pressure chamber 10 moves through the inlet 110 into the valve assembly 500. The fluid can pass through the guide 590 and the impeller 600 arranged in the holding space 220 to rotate the shaft 680, and this can drive the generator 480 to charge the battery 410. The fluid that has passed the impeller 600 must pass through the inlet channel 260 formed in the main valve body 530 and, to do so, must have a pressure sufficient to open the main valve body 530.

That is, since the inlet channel 260 is closed by the main disk spring 550, and since the back-pressure chamber 300 is located on the other side of the main disk spring 550, the fluid can pass only if the fluid enters with a pressure greater than the pressure of the back-pressure chamber 300 pushing the main disk spring 550 against the main valve body 530. Although the auxiliary channel 284 of the main valve body 530 also connects to the holding space 220, the fluid does not enter the auxiliary channel 284, because the bypass channel 350 is completely closed by the control valve 570 and thus forms a cul-de-sac with no exit. Thus, while the control valve 570 is in a completely closed state, a high pressure is created in the back-pressure chamber 300, and the valve assembly 500 provides a strong flow resistance. This consequently makes it harder for the absorber rod 134 to move down in the shock absorber 1000 and allows the shock absorber 1000 to provide a high damping force.

The fluid that opens the main disk spring 550 to flow into the back-pressure chamber 300 can immediately be discharged back through the outlet channel 360. The fluid that passes through the outlet channel 360 can flow to the outlet 130 through the gap 370 between the outer perimeter of the connector body 580 and the inner perimeter of the housing 510 as illustrated in FIG. 5 and FIG. 6A, and the fluid that exits through the outlet 130 can return to the low-pressure chamber 30 of the shock absorber 1000.

Referring to FIG. 6B, in which the control valve 570 has opened the bypass channel 350, the fluid that has entered the valve assembly 500 through the inlet 110 can pass through the guide 590 and the impeller 600 arranged in the holding space 220 to rotate the shaft 680, and the fluid that has passed the impeller 600 can move not only through the inlet channel 260 formed in the main valve body 530 but also through the auxiliary channel 284. That is, unlike the configuration in FIG. 6A, the control valve 570 has the bypass channel 350 at least partially open, so that it is possible for the fluid within the back-pressure chamber 300 to be discharged through the bypass channel 350. Therefore, a flow path may be formed, and the fluid within the back-pressure chamber 300 may not remain stagnant. The fluid entering through the auxiliary channel 284 can pass through the back-pressure chamber 300 and the bypass channel 350 and then flow through the outlet channel 360 to the outlet 130.

Since the fluid is not stagnant within the back-pressure chamber 300, the pressure within the back-pressure chamber 300 can be lowered depending on the degree of opening of the control valve 570, and the fluid flowing through the inlet channel 260 of the main valve body 530 can also open the main disk spring 550 more easily compared to the case of the control valve 570 being completely blocked. Thus, while the control valve 570 is in an open state, the pressure of the back-pressure chamber 300 can be reduced according to the extent to which the control valve 570 is open, and the valve assembly 500 can provide a relatively weak flow resistance. Therefore, the absorber rod 134 in the shock absorber 1000 can move down more easily, and the shock absorber 1000 can provide a relatively lower damping force.

FIGs. 7A and 7B illustrate the control valve 570 in the generator-integrated variable-damping valve assembly 500 shown in FIG. 5, where FIG. 7A illustrates the front of the control valve 570, and FIG. 7B illustrates the other side of the control valve 570.

Referring to FIGs. 7A and 7B, a control valve 570 according to an embodiment of the invention can include a valve rod 571, a lever 575, and a rotary plate 577. The control valve 570 can adjust the degree to which the bypass channel 350 is opened, as the lever 575 is manipulated by the actuator 450.

The valve rod 571 can be mounted on the back-pressure chamber body 560 in a position facing the bypass channel 350. For instance, in the example illustrated in FIG. 5, an insertion channel 340 is formed in the back-pressure chamber body 560 in addition to the bypass channel 350 such that the insertion channel 340 is in communication with the bypass channel 350, and the valve rod 571 is inserted in the insertion channel 340. Depending on the manipulation applied to the lever 575, the valve rod 571 can completely close the bypass channel 350 or adjust the degree of opening of the bypass channel 350.

According to the present embodiment, the valve rod 571 can have a cylindrical shape that extends along a direction parallel to the extending direction of the shaft 680. A flange 573 can be provided on the valve rod 571, and the flange 573 can be inserted into a groove formed in the housing 510 with an O-ring, etc., placed in-between. The flange 573 can secure the control valve 570 at its correct position while permitting rotation and can help in preventing the fluid from leaking at a position where such leakage is undesired.

A valve channel 310 and a valve opening 320 can be formed in the valve rod 571. The valve channel 310 can be formed along the lengthwise direction of the valve rod 571 and can be in communication with the back-pressure chamber 300 at one side, while the valve opening 320 can be formed such that the valve channel 310 opens into the outer perimeter of the valve rod 571 at a particular location.

A rotary plate 577 having a particular diameter can be provided on the other side of the valve rod 571, and the lever 575 can be formed on the rotary plate 577. A magnet 465 can be coupled to the lever 575 for interaction with the actuator 450. The rotary plate 577 allows the lever 575 to be placed at a position separated from the rotational axis of the valve rod 571. The size of the rotary plate 577 and the position of the lever 575 can be configured differently depending on the degree by which the actuator 450 moves the lever 575 and on the diameter of the valve rod 571.

FIGs. 8A to 8F illustrate how the actuator 450 may control the control valve 570 shown in FIGs. 7A and 7B, where FIGs. 8A, 8C, and 8E depict the actuator 450 and the lever 575 together, while FIGs. 8B, 8D, and 8F depict the relative position of the valve rod 571 with respect to the bypass channel 350.

According to the present embodiment, the actuator 450 can include a first coil 451, a second coil 452, a slide member 460, and a magnet 465. The slide member 460 can be an elongated member that is arranged to pass through the centers of the first coil 451 and second coil 452 and can be configured to move along the lengthwise direction while being electrically insulated from the first coil 451 and second coil 452 by insulators 453, 454.

The first coil 451 can be a coil of conductive material that is wound around one side of the slide member 460. The first coil 451 may be configured to receive an electrical current, and the current applied on the first coil 451 is referred to herein as a first current. The second coil 452 can be a coil of conductive material that is wound around the other side of the slide member 460. The second coil 452 may also be configured to receive an electrical current, and the current applied on the second coil 452 is referred to herein as a second current.

The magnet 465 can be coupled to the slide member 460 at a position between the first coil 451 and the second coil 452. The magnet 465 can be coupled to the slide member 460 such that the N pole faces one of the first coil 451 and second coil 452 and the S pole faces the other of the first coil 451 and second coil 452. The lever 575 of the control valve 570 can be coupled to the magnet 465 but coupled in a manner that allows a slight amount of movement along a direction that intersects the lengthwise direction of the slide member 460, so that the linear movement of the slide member 460 can be converted into a rotational movement of the lever 575 and rotary plate 577.

As illustrated in FIGs. 8A to 8F, the magnet 465 coupled to the lever 575 of the control valve 570 can be arranged between the first coil 451 and the second coil 452 and can manipulate the lever 575 by moving between the first coil 451 and second coil 452 according to the first current and second current applied on the first coil 451 and second coil 452. That is, when the actuator 450 applies a first current and a second current to the first coil 451 and second coil 452 in accordance with the control of the control unit 400, the magnet 465 can be moved to a desired position by the magnetic fields formed around the first coil 451 and second coil 452, and as the direction of the valve opening 320 formed in the valve rod 571 is changed according to the position of the magnet 465 and the lever 575 to which it is coupled, the degree of opening by the control valve 570 can be changed.

FIGs. 8A to 8F illustrate an example in which the actuator 450 manipulates the lever 575 by applying a current of 0 to 2 amperes to each of the first coil 451 and the second coil 452. In the state depicted in FIG. 8A, the actuator 450 has applied a current of 2 amperes to the first coil 451 but has not applied a current to the second coil 452 (i.e., applied a current of 2 amperes as the first current and a current of 0 amperes as the second current). As a result, the magnet 465 has moved the lever 575 to a first position, which is the position closest to the second coil 452 side, and the valve rod 571 has rotated about its rotational axis within the insertion channel 340 to a corresponding angle. At this corresponding angle, the valve opening 320 formed in the valve rod 571 is not aligned with the bypass channel 350, with not even a little overlap, and thus is blocked by the inner perimeter of the insertion channel 340, as illustrated in FIG. 8B. This state corresponds to the control valve 570 being completely closed, and since the valve channel 310 is not in communication with the bypass channel 350, the back-pressure chamber 300 can maintain a high pressure.

In the state depicted in FIG. 8C, the actuator 450 has applied a current of 2 amperes to the first coil 451 and also a current of 2 amperes to the second coil 452 (i.e., applied a current of 2 amperes as the first current and a current of 2 amperes as the second current). As a result, the lever 575 coupled to the magnet 465 has moved to a middle position between the first coil 451 and the second coil 452, and the valve rod 571 has rotated about its rotational axis within the insertion channel 340 to a corresponding angle. At this corresponding angle, the valve opening 320 formed in the valve rod 571 partially overlaps the bypass channel 350, so that about a half of the area of the valve opening 320 is in communication with the bypass channel 350, as illustrated in FIG. 8D. This state corresponds to the control valve 570 being partially open, and since fluid can pass through the valve channel 310 and the bypass channel 350, the back-pressure chamber 300 can maintain a relatively lower pressure. In the state depicted in FIG. 8C, the actuator 450 can obtain the same results by applying currents of 1 ampere or of another value equally to the first and second coils 451, 452.

In the state depicted in FIG. 8E, the actuator 450 has not applied a current to the first coil 451 but has applied a current of 2 amperes to the second coil 452 (i.e., applied a current of 0 amperes as the first current and a current of 2 amperes as the second current). As a result, the magnet 465 has moved the lever 575 to a second position, which is the position closest to the first coil 451 side, and the valve rod 571 has rotated about its rotational axis within the insertion channel 340 to a corresponding angle. At this corresponding angle, the valve opening 320 formed in the valve rod 571 is fully aligned with the bypass channel 350, as illustrated in FIG. 8F, and the area of overlap between the valve opening 320 and the bypass channel 350 is the greatest. This state corresponds to the control valve 570 being completely open, and the back-pressure chamber 300 can maintain the lowest pressure possible in the shock absorber 1000.

The actuator 450 does not necessarily have to apply currents of 0 or 2 amperes to the first and second coils 451, 452 and can apply currents of any value between 0 and 2 amperes, in response to which the first coil 451 and the second coil 452 can move the magnet 465 and the slide member 460 correspondingly. Since the degree of opening of the control valve 570 may be adjusted according to the first current and second current, a type of continuously variable valve can be obtained.

After the actuator 450 has moved the control valve 570 to a particular position as necessary, it is no longer necessary for the actuator 450 to keep applying currents to the first and second coils 451, 452. After the control valve 570 has been placed as in the states depicted in FIG. 8A, 8C, or 8E or to any one of numerous states between the first position and second position, the control valve 570 can maintain the corresponding position even if there is no separate force applied. Of course, when the control valve 570 is in a partially open state, the pressure of the fluid may partially be applied on the valve rod 571, but there would not be a force sufficient to rotate the valve rod 571.

As presented above, the actuator 450 uses power only momentarily when manipulating the control valve 570 and at normal times does not consume power. This means that the generator 480 for producing the electricity that drives the control unit 400 including the actuator 450, the battery for storing the produced electricity, and overall valve assembly 500 itself can be implemented in small sizes.

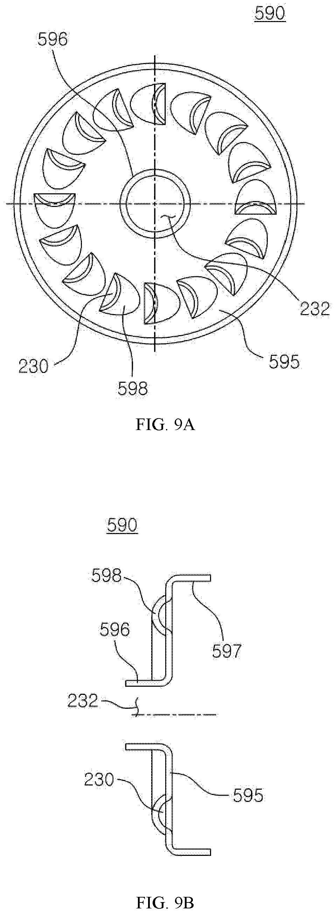

FIGs. 9A and 9B illustrate the guide in the generator-integrated variable-damping valve assembly 500 shown in FIG. 5, where FIG. 9A is a cross-sectional view from the front of the guide 590, and FIG. 9B is an elevational view from one side of the guide 590. As described above, the guide 590 can be arranged in the holding space 220 on the inner side of the connector body 580 and can cause the fluid that has entered through the inlet 110 to form a helical flow before passing the impeller 600.

Referring to FIGs. 9A and 9B, the guide 590 can mainly include a circular plate 595, a boss 596, and an outer rim 597.

The circular plate 595 can be formed in the shape of a circular plate having a size corresponding to the inner diameter of the connector body 580, and a multiple number of guide holes 230 can be formed that are arranged in a circular shape. The guide holes 230 can have a semi-elliptical shape, for example, and each guide hole 230 can be provided with a guide vane 598 that is open towards one direction with respect to a circumferential direction.

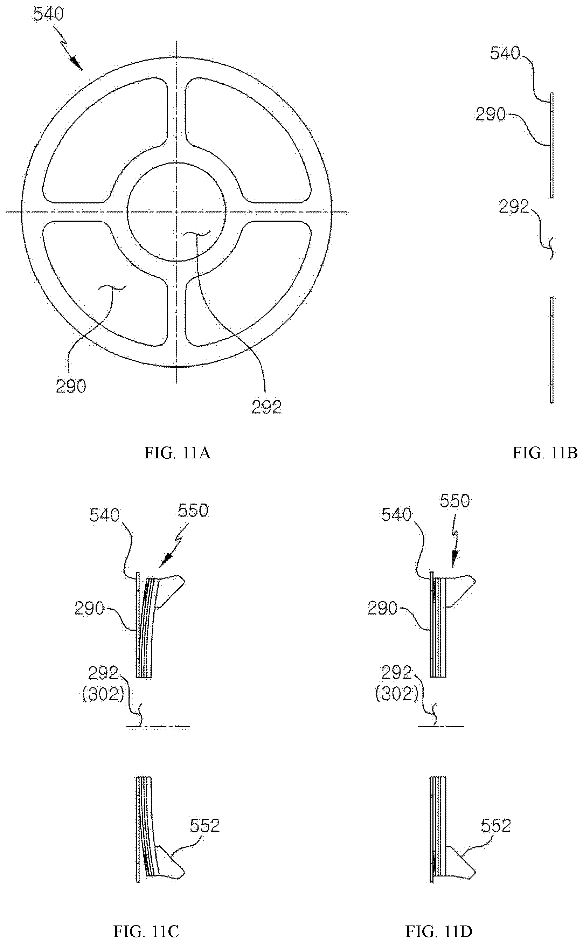

As illustrated in the drawings, the guide vanes 598 can protrude and open at the linear portion of the semi-elliptically shaped guide hole 230, with the degree of protrusion reduced at the arc portion, so that the fluid passing through the guide 590 may enter at the linear portions of the guide holes 230 and flow in a direction towards the arc portions. That is, a fluid entering the guide 590 in FIG. 9B head on can form a helical flow rotating in a counter-clockwise direction due to the configuration of the guide holes 230 and guide vanes 598. As in the example illustrated in FIG. 5, the guide holes 230 and the guide vanes 598 can be formed in positions corresponding to the impeller holes 240 (see FIG. 11A) of the impeller 600, and the impeller holes 240 can be formed in positions corresponding to the inlet channel 260 of the main valve body 530.

The boss 596 can be implemented in the form of a cylindrical tube that protrudes towards one side from the center on one side of the circular plate 595. A bearing 592 for supporting one end of the shaft 680 can be mounted in the through-hole 232 on the inner side of the circular plate 595. Since the guide 590 is not a rotating member, unlike the impeller 600, the guide 590 can support the end of the shaft 680 in a stable manner.

The outer rim 597 can be implemented in the form of a rim that protrudes towards the other side from the outer perimeter on the other side of the circular plate 595. In cases where the guide 590 is coupled to the main valve body 530, the outer rim 597 can protrude by a length that is greater than the thickness of the impeller 600 so as to provide a space for the impeller 600 between the circular plate 595 and the main valve body 530. In a preferred embodiment, the outer perimeter of the outer rim 597 can press against the inner perimeter of the connector body 580, so that the fluid passing through the guide 590 may mainly flow through the guide holes 230 in the circular plate 595. A sealing member such as an O-ring, etc., can be provided at each portion where the outer rim 597 contacts the main valve body 530 and/or connector body 580, as illustrated in FIG. 5.

FIGs. 10A to 10C illustrate the impeller 600 in the generator-integrated variable-damping valve assembly 500 shown in FIG. 5, where FIG. 10A is an elevational view from one side of the impeller 600, FIG. 10B is an elevational view from below the impeller 600, and FIG. 10C is a cross-sectional view from the front of the impeller 600. As described above, the impeller 600 can be rotated by the passing fluid and can rotate the shaft 680 so as to drive the generator 480.

Referring to FIGs. 10A to 10C, the impeller 600 can mainly include a circular plate 605 and a multiple number of impeller vanes 608 formed in its perimeter portion.

The circular plate 605 of the impeller 600 can serve to secure the impeller vanes 608 at their required positions. A protrusion 606 can protrude towards the other side from the center on the other side of the circular plate 605, where the protrusion 606 can contact the passage member 610 and/or the main valve body 530 to prevent the impeller 600 from departing from its correct position. The protrusion 606 can maintain a slight gap between the circular plate 605 and the passage member 610 and/or main valve body 530, and a portion of the fluid can enter through this gap into the auxiliary channel 284 as necessary. A through-hole 242 can be formed in the center of the circular plate 605 for coupling with the shaft 680. The shaft 680 inserted through the through-hole 242 can be firmly secured such as to be capable of completely transmitting the rotational force of the impeller 600. It should be appreciated that other methods besides using a through-hole 242 can be used for firmly securing the impeller 600 to the shaft 680.

The multiple impeller vanes 608 can be formed in inclined orientations in a perimeter portion of the circular plate 605, and impeller holes 240 can be formed in-between adjacent impeller vanes 608. Fluid passing through the impeller holes 240 may push the impeller vanes 608, causing the impeller 600 and the shaft 680 to rotate.

The impeller vanes 608 and the impeller holes 240 can be formed in positions corresponding to the positions where the guide holes 230 are formed in the guide 590. Thus, the fluid that has passed through the guide holes 230 can immediately pass through the impeller holes 240. The inclined direction and angle of the impeller vanes 608 can be designed in consideration of the shapes of the guide holes 230 and guide vanes 598. The impeller vanes 608 and impeller holes 240 can also be formed in positions corresponding to the inlet channel 260 of the main valve body 530. Thus, the fluid that has passed through the impeller holes 240 can mostly pass through the inlet channel 260.

As described above, the length by which the outer rim 597 of the guide 590 protrudes towards the other side can be greater than the overall thickness of the protrusion 606 and impeller vanes 608 of the impeller 600, so that the impeller 600 can be positioned between the circular plate 595 of the guide 590 and the main valve body 530. In particular, the impeller 600 can be formed such that portions other than the protrusion 606 do not contact the main valve body 530. This can minimize friction, which inhibits the rotation of the impeller 600, while at the same time ensuring that the flow paths between the impeller holes 240 and the auxiliary channel 284 are not blocked.

FIGs. 11A to 11D illustrate the protective disk 540 and the main disk spring 550 in the generator-integrated variable-damping valve assembly 500 shown in FIG. 5, where FIG. 11A is an elevational view from one side of the protective disk 540, and FIG. 11B is a cross-sectional view from the front of the protective disk 540. FIG. 11C is a cross-sectional view depicting the protective disk 540 and the main disk spring 550 together, and FIG. 11D is a cross-sectional view depicting the main disk spring 550 in an open state.

As described above, when the shock absorber 1000 is in use, the fluid can open the main disk spring 550 and pass through the inlet channel 260 of the main valve body 530. However, since the main valve body 530 is fabricated from a material such as plastic, etc., for convenient manufacture and assembly, the other side (seat surface) of the main valve body 530 can become worn away due to the great forces involved in the repeated opening and closing of the main disk spring 550. This phenomenon can make it difficult for the main disk spring 550 to seal the inlet channel 260 in a watertight manner and may therefore lower the performance of the valve assembly 500 and the shock absorber 1000 itself.

To resolve this problem, a valve assembly 500 according to an embodiment of the invention can further include a protective disk 540 between the main valve body 530 and the main disk spring 550. The protective disk 540 can be formed from a material having a higher strength than that of the main valve body 530 and can be coupled to the other side (seat surface) of the main valve body 530. Even though the protective disk 540 is made of a material having high strength, its thickness is not great, so that coupling the protective disk 540 to the passage member 610, etc., is not made much more difficult.

Referring to FIG. 11A and FIG. 11B, the protective disk 540 can be shaped as a circular plate having a small thickness, with a center hole 292 formed in the middle and a multiple number of windows 290 formed around the center hole 292. The center hole 292 of the protective disk 540 can be formed in the same size and in a corresponding position as the center hole of the main valve body 530, and the windows 290 can be formed in positions that allow communication with the inlet channel 260 of the main valve body 530.

Referring to FIG. 11C and FIG. 11D, the main disk spring 550 can be coupled to the other side of the protective disk 540 and can be coupled such that the center hole 302 of the main disk spring 550 is aligned with the center hole 292 of the protective disk 540. The main disk spring 550 can cover the inlet channel 260 by covering the windows 290 of the protective disk 540.

The protective disk 540 and the main disk spring 550 can be coupled to each other by the passage member 610 that is inserted through their center holes 292, 302. As such, when the main disk spring 550 is opened by the fluid, the perimeter portion of the main disk spring 550 can be lifted, while the middle portion of the main disk spring 550 can remain fixed. Here, the protective disk 540 can remain coupled to the main valve body 530 to protect the surface on the other side of the main valve body 530 from wear.

The main disk spring 550 can be provided with a sealing rim 552 on the other side. The sealing rim 552 can protrude towards the back-pressure chamber body 560 and have an outer diameter that increases towards the other side so as to always tightly press against the inner perimeter of the back-pressure chamber body 560. Therefore, even if the main disk spring 550 that kept the inlet channel 260 closed is lifted by the inflowing fluid, the sealing rim 552 of the main disk spring 550 can prevent the back-pressure chamber 300 from communicating with the inlet channel 260 and/or outlet channel 360 and can thus prevent the pressure of the back-pressure chamber 300 from being dropped unintentionally due to a loss of fluid from the back-pressure chamber 300.

The sealing rim 552 of the main disk spring 550 or the main disk spring 550 as a whole can be formed from a flexible material so as to provide a high sealing ability. For example, in a preferred embodiment of the invention, the entire main disk spring 550 can be formed by molding using a material such as rubber, etc.

In the example illustrated in FIG. 2A through FIG. 11D, the auxiliary channel is formed in the center of the main valve body 530, the outlet channel 360 is formed at the perimeter portion, and the inlet channel 260 is formed in-between, with the main disk spring 550 covering the inlet channel 260 of the main valve body 530. Here, fluid that has passed through the inlet 110 rotates the impeller 600 before entering the inlet channel 260. However, the invention is not limited thus, and the positions of the inlet channel 260, auxiliary channel, and outlet channel 360 can be configured differently in various embodiments. Also, the fluid does not necessarily have to rotate the impeller 600 before entering the back-pressure chamber 300, and in certain embodiments, the fluid can rotate the impeller 600 before exiting through the outlet 130 (for instance, the space outside the connector tube 585 can serve as the inlet, and the connector channel 212 on the inner side of the connector tube 585 can serve as the outlet). Of course, the compositions of the main valve body 530, protective disk 540, and main disk spring 550 may be modified for this purpose.

The following provides a more detailed description of a generator-integrated variable-damping valve assembly 800 according to a second disclosed embodiment of the invention. A generator-integrated variable-damping valve assembly 800 based on the second disclosed embodiment of the invention can have many features in common with a valve assembly 500 based on the first disclosed embodiment described above, and the descriptions below will focus more on the differences of the vale assembly 800 based on the second disclosed embodiment. Features described with respect to the first disclosed embodiment can be applied to the second disclosed embodiment, and features described with respect to the second disclosed embodiment can likewise be applied to the first disclosed embodiment. Certain reference numerals mentioned in the description of the second disclosed embodiment are intended to refer to corresponding components of the components to which the numerals are assigned in the first disclosed embodiment.

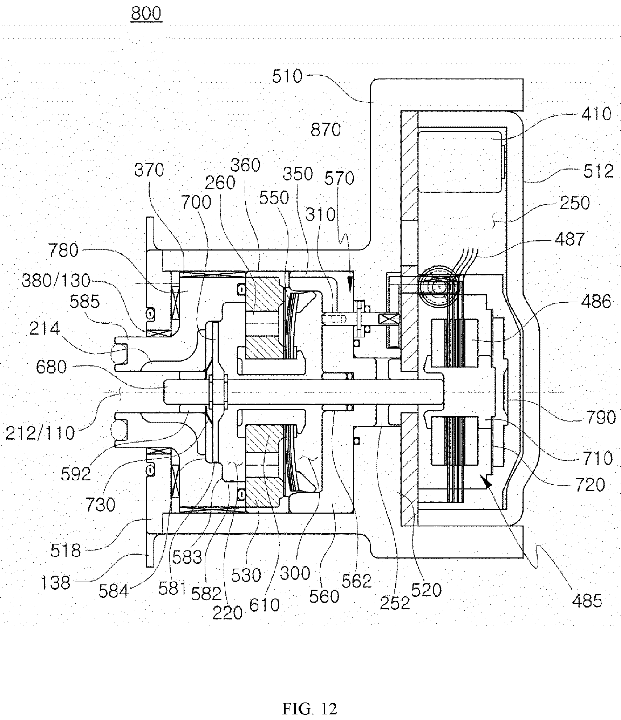

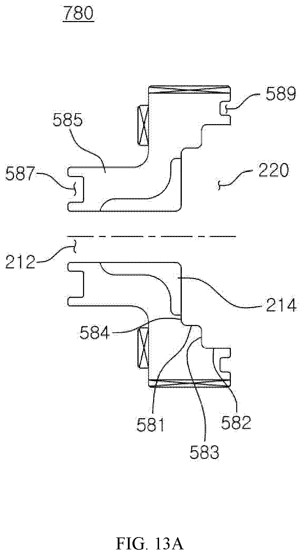

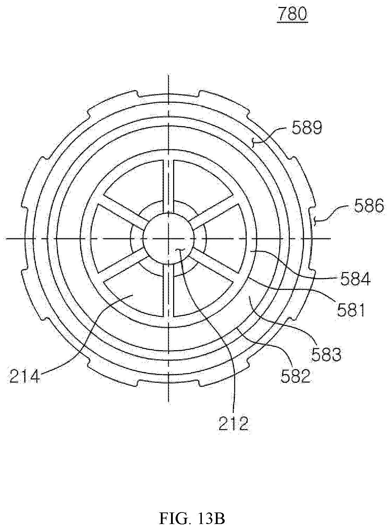

FIG. 12 is a cross-sectional view illustrating a generator-integrated variable-damping valve assembly 800 according to a second disclosed embodiment of the invention, and FIGs. 13A and 13B illustrate the connector body 780 in the generator-integrated variable-damping valve assembly 800 shown in FIG. 12.

Referring to FIG. 12 and FIGs. 13A and 13B, a valve assembly 800 according to the present embodiment can mainly include a control unit 400, a piezoelectric stack 485, a housing 510, a main valve body 530, a protective disk 540, a main disk spring 550, a back-pressure chamber body 560, a control valve 570, a passage member 610, a shaft 680, a piston 700, and a connector body 780.

Whereas a valve assembly 500 based on the first disclosed embodiment described above uses a combination of an impeller 600 and a generator 480, a valve assembly 800 based on the second disclosed embodiment of the invention can use a combination of a piston 700 and a piezoelectric stack 485.

The piezoelectric stack 485 can provide electrical power to the control unit 400, similarly to the generator 480 of the first disclosed embodiment described above, and more specifically can charge the battery 410 of the control unit 400. The piezoelectric stack 485 can include one or more piezoelectric element and can produce electricity from the pushing force of the shaft 680 by using the property of the piezoelectric element of generating electricity when a physical deformation is applied. The piezoelectric stack 485 can be mounted on a pressure part 710, and the pressure part 710 can be configured to press the piezoelectric stack 485 when the shaft 680 is moved towards the other side. When the shaft 680 applies pressure on the pressure part 710, the piezoelectric stack 485 can generate an electric current, which can be provided to the battery 410 through wires 487.

Since a translational force is required for driving the piezoelectric stack 485 instead of a rotational force, a piston 700 can be used in the present embodiment instead of the impeller 600 of the previously described embodiment, and there may be slight differences in the shaft 680 and the connector body 780. Also, since the piston 700 does not require a helical flow in the inflowing fluid, the guide 590 can be omitted.

Referring to FIGs. 13A and 13B, the connector body 780 can be coupled to one side of the main valve body 530, and the connector tube 585 can be positioned at the opening of the housing 510 to partition the opening into an inlet 110 and an outlet 130, where the holding space 220 defined on the inner side of the connector body 780 can be divided with respect to a first curb 583 into a first diameter portion 581 having a first inner diameter and a second diameter portion 582 having a second inner diameter that is greater than the first inner diameter. A second curb 584 can also be formed on the connector body 780, between the connector channel 212, which is located on the inner side of the connector tube 585, and the holding space 220.

The guide 590 may be omitted in this embodiment, and since the bearing 592 for supporting one end of the shaft 680 cannot be supported on the guide 590, the bearing 592 can be supported by the connector channel 212 of the connector body 780. In order that the bearing 592 does not block the flow of fluid through the connector channel 212, one or more flow grooves 214 can be formed in the connector tube 585 and second curb 584 of the connector body 780. The flow grooves 214 can have greater depths towards the holding space and thus be deeper at the other side than at the one side. In certain embodiments, the bearing 592 can be omitted, and the one end of the shaft 680 can either remain unsupported or can be supported by another means. In such cases, the connector channel 212 itself can be implemented in a form that has the inner diameter increasing towards the other side.

An annular groove 587 can be formed in one side of the connector tube 585, where a sealing member such as an O-ring, etc., can be inserted for sealing the contact portion between the connector body 780 and the middle tube 116 of the shock absorber 1000. Similarly, an annular groove 589 can also be formed in the other side of the connector body 780, where a sealing member such as an O-ring, etc., can be inserted for sealing the contact portion between the connector body 780 and the main valve body 530.

Referring again to FIG. 12, the piston 700 can be positioned within the holding space 220 while coupled to the shaft 680. The piston 700 can have an outer diameter that is smaller than the inner diameter of the second diameter portion 582 of the connector body 780 (i.e., the second inner diameter) and can be arranged in a position adjacent to the first curb 583. In the example illustrated in FIG. 12, the piston 700 has an outer diameter corresponding to the inner diameter of the first diameter portion 581 of the connector body 780 (i.e., the first inner diameter) and is arranged on the inner side of the first diameter portion 581. The piston 700 can be configured to be pushed by the flow when the fluid enters and thus be moved towards the other side.

The shaft 680 can include an elastic member 730 arranged on one side of the piston 700. The elastic member 730 can support the piston 700 such that the piston 700 does not contact the second curb 584.

When the fluid enters through the inlet 110, the fluid can push the piston 700 and cause the piston 700, as well as the shaft 680 to which it is coupled, to move towards the other side, whereby the shaft 680 can push the pressure part 710 and cause the piezoelectric stack 485 to produce electricity. Since the depths of the flow grooves 214 in the connector body 780 increase or the inner diameter of the connector channel 212 increases at the holding space 220 side, and since the elastic member 730 supports the piston 700 at a position separated from the second curb 584, the fluid can contact the piston 700 over a large area, and the pressure of the fluid can be effectively transmitted to the piston 700 and the shaft 680.

When the fluid presses the piston 700, the piston 700 may be pushed towards the other side and consequently be moved beyond the first diameter portion 581 of the connector body 780 and into the inner side of the second diameter portion 582. As the outer diameter of the piston 700 is smaller than the inner diameter of the second diameter portion 582 (i.e., the second inner diameter), the fluid can flow through the gap between the piston 700 and the second diameter portion 582 and thus flow through a path similar to that illustrated in FIGs. 6A and 6B.

A return disk spring 720 can be provided on the other end of the shaft 680. The return disk spring 720 can have a portion thereof coupled to the shaft 680 and/or pressure part 710 and another portion thereof coupled to the housing 510 or another component connected to the housing 510. When the fluid presses the piston 700 such that the piston 700 is pushed towards the other side, the return disk spring 720 can undergo a slight elastic deformation and absorb a small amount of the applied force. Afterwards, when there is no fluid entering to press the piston 700, there would no longer be any pressure on the piston 700, and the return disk spring 720 can push the shaft 680 back to the one side, so that the piston 700 may return to its original position on the inner side of the first diameter portion 581.

A stopper member 790 can further be provided on the other side of the pressure part 710. In cases where the fluid enters in a very high speed and thus applies a large pressure on the piston 700, there is a risk of such pressure damaging the piston 700 and/or piezoelectric stack 485. Thus, if the pressure of the fluid entering through the inlet 110 exceeds a predetermined threshold, the return disk spring 720 can be deformed such that the pressure part 710 and/or the shaft 680 contacts the stopper member 790, in response to which the stopper member 790 can apply a resisting force on the shaft 680 to offset the pressure of the fluid. The stopper member 790 can be formed from a material capable of elastic deformation and can also be formed from a material having a high strength. The stopper member 790 does not necessarily have to be positioned within the control space 250. The stopper member 790 can, for example, be arranged between the piston 700 and the main valve body 530 to apply a resisting force on the piston 700.

Although the descriptions above use an example in which the holding space 220 of the connector body 780 where the piston 700 is located is connected with the inlet 110, through which the fluid enters the valve assembly 800, so that the piston 700 is manipulated by inflowing the fluid, it is also possible, as already described above, for the holding space 220 to be connected to the outlet 130, with the piston 700 manipulated by outflowing fluid. In such cases, the first diameter portion 581 and second diameter portion 582 defining the holding space 220 can have different positions.

The following provides a more detailed description of a generator-integrated variable-damping valve assembly 900 according to a third disclosed embodiment of the invention. A generator-integrated variable-damping valve assembly 900 based on the third disclosed embodiment of the invention can have many features in common with a valve assembly 500, 800 based on the first and second disclosed embodiments described above, and the descriptions below will focus more on the differences of the vale assembly 900 based on the third disclosed embodiment. Features described with respect to the first and second disclosed embodiments can be applied to the third disclosed embodiment, and features described with respect to the third disclosed embodiment can likewise be applied to the first and second disclosed embodiments. Certain reference numerals mentioned in the description of the third disclosed embodiment are intended to refer to corresponding components of the components to which the numerals are assigned in the first and/or second disclosed embodiments.

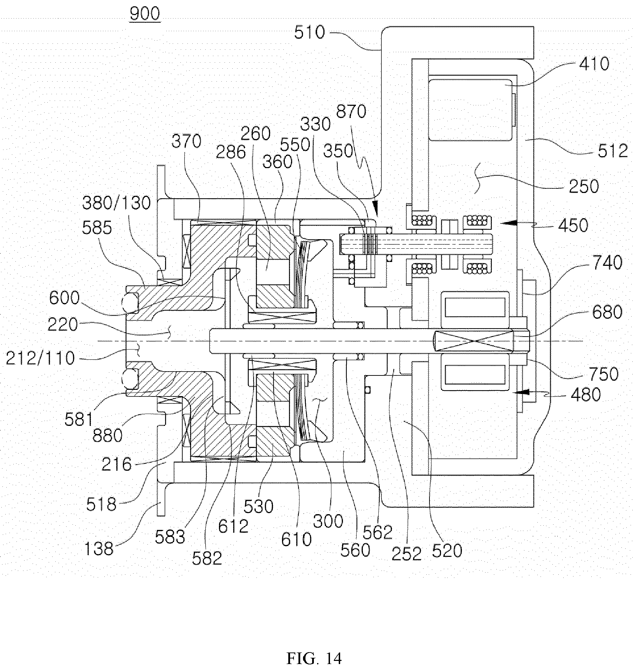

FIG. 14 is a cross-sectional view illustrating a generator-integrated variable-damping valve assembly 900 according to a third disclosed embodiment of the invention.

Referring to FIG. 14, a valve assembly 900 according to the present embodiment can mainly include a control unit 400, a generator 480, a housing 510, a main valve body 530, a protective disk 540, a main disk spring 550, a back-pressure chamber body 560, an impeller 600, a passage member 610, a shaft 680, a control valve 870, and a connector body 880.

A connector body 880 based on this embodiment can be coupled to one side of the main valve body 530 and can have the connector tube 585 positioned at the opening of the housing 510 to partition the opening into an inlet 110 and an outlet 130, where the holding space 220 defined on the inner side of the connector body 880 can be divided with respect to a curb 583 into a first diameter portion 581 having a first inner diameter and a second diameter portion 582 having a second inner diameter that is greater than the first inner diameter.

The impeller 600 can be positioned in the holding space 220 while coupled to the shaft 680. The impeller 600 can have an outer diameter corresponding to the inner diameter of the first diameter portion 581 of the connector body 880 (i.e., the first inner diameter) and can be arranged in a position adjacent to the curb 583. When the fluid does not exceed a predetermined threshold, the impeller 600 can be positioned adjacent to the curb 583, and the fluid arriving at the impeller 600 can flow only through the impeller hole 240 of the impeller 600. A multiple number of flow grooves 216 can be formed in the curb 583 of the connector body 880, in order that the fluid arriving at the holding space 220 may easily reach the impeller hole 240.

The valve assembly 900 can further include an elastic member 740 that elastically supports the shaft 680 such that the shaft 680 is movable along its extending direction in relation to the housing 510. The elastic member 740 can be provided as a disk spring, for example, or in another form capable of elastic deformation and can be coupled to the shaft 680 by way of a bearing 750.

In cases where the fluid enters in a very high speed in passing through the impeller 600, there is a risk of the resulting pressure damaging the impeller 600 and rotating the generator at an excessively high speed. The generator 480 can produce electricity in a stable manner and maintain a long life span when operated at speeds within a designed range, and as such, it is not desirable for the impeller 600 and the coupled shaft 680 to rotate at an excessively high speed.

Thus, if the pressure of the fluid entering through the inlet 110 exceeds a predetermined threshold, the elastic member 740 can be deformed and cause the impeller 600, shaft 680, and generator 480 to move a particular distance towards the other side. In another embodiment not shown in the drawings, only the impeller 600 and the shaft 680 can move towards the other side, and the generator 480 can remain at its position.

When a pressure exceeding the threshold is applied on the impeller 600, the impeller 600 can be moved by the pressure of the fluid towards the other side, and the impeller 600 can be separated from the curb 583 of the connector body 880. Thus, the fluid arriving at the impeller 600, in addition to passing through the impeller hole 240, can partially flow through the gap between the outer perimeter of the impeller 600 and the curb 583. As a portion of the fluid avoids the impeller 600, the fluid may not rotate the impeller 600 at an excessively high speed. Afterwards, when the pressure of the fluid is reduced again, the elastic member 740 can return the impeller 600, shaft 680, and generator 480 (or the impeller 600 and shaft 680) to their original positions.

In cases where the guide 590 is omitted as in the present embodiment, it would not be possible to have a bearing 592 supported on the guide 590, and as such, a bearing 612 for supporting the shaft 680 can be mounted in the center hole 284 of the passage member 610. In order that the center hole 284 of the passage member 610, which serves as an auxiliary channel in the main valve body 530, is not blocked by the bearing 612, one or more flow grooves 286 can be formed in the passage member 610. The flow grooves 286 can connect the holding space 220 with the center hole 284 of the passage member 610, so that the center hole 284 may function as the auxiliary channel.

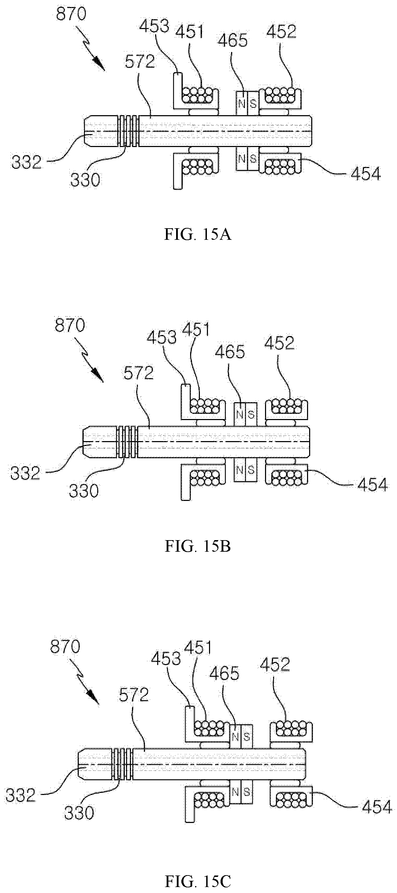

A valve assembly 900 based on the present embodiment can include a control valve 870 having a modified structure. The following provides a more detailed description on the operation of the control valve 870, with reference to FIG. 14 and FIGs. 15A to 15C. FIGs. 15A to 15C illustrate how the actuator 450 controls the control valve 870 shown in FIG. 14.

Similarly to the embodiment described above, an actuator 450 according to this embodiment can include a first coil 451, a second coil 452, a slide member, and a magnet 465, where the slide member can be integrated with the valve rod 572 of the control valve 870. That is, the valve rod 572 may also serve as the slide member. This can be regarded as the slide member being formed by one portion of a member and the valve rod 572 being formed by another portion of the same member.

The magnet 465 can be arranged between the first coil 451 and the second coil 452. Under the control of the control unit 400, the actuator 450 can apply a first current and a second current to the first coil 451 and the second coil 452, to thereby control the position of the magnet 465 and manipulate the position of the valve rod 572.

The control valve 870 of a valve assembly 900 based on the present embodiment can include a valve rod 572 and can adjust the degree of opening of the bypass channel 350 by having the actuator 450 adjust the position of the magnet 465 that is coupled to the valve rod 572.

The valve rod 572 can be mounted on the back-pressure chamber body 560 at a position facing the bypass channel 350. For instance, in the example illustrated in FIG. 14, a bypass channel 350 and an insertion channel 340 that communicates with the bypass channel 350 but extends in an intersecting direction are formed together in the back-pressure chamber body 560, and the valve rod 572 can be moved along its lengthwise direction within the insertion channel 340 by a manipulation of the lever 575. According to this embodiment, the valve rod 572 can have a cylindrical shape that extends in a direction parallel to the extending direction of the shaft 680 and can have an outer diameter corresponding to the inner diameter of the insertion channel 340. The valve rod 572 can be inserted in the insertion channel 340 and can be coupled such that it is movable along the extending direction of the insertion channel 340.

In order that the valve rod 572 may move easily within the insertion channel 340, an air channel 332 can be formed within the valve rod 572. The air channel 332 can penetrate through the valve rod 572 along its lengthwise direction. Even if the valve rod 572 is inserted into the narrow insertion channel 340, the air channel 332 makes it possible to form the same pressure at the one side and the other side of the valve rod 572, and the valve rod 572 can thus move easily along the extending direction of the insertion channel 340 without any particular air resistance.

A valve opening channel 330 can be formed in a particular position of the valve rod 572. The valve opening channel 330 can be formed to permit flow along the extending direction of the bypass channel 350. The valve opening channel 330 can be implemented in the form of an annular groove formed in the outer perimeter of the valve rod 572, so that the valve opening channel 330 may be separated from the air channel 332 formed in the center of the valve rod 572. Of course, in cases where the air channel 332 is not formed in the center of the valve rod 572 or in cases where the air channel 332 is omitted, it is possible to form a valve opening channel 330 that penetrates through the middle of the valve rod 572. As illustrated in FIGs. 15A to 15C, the valve opening channel 330 can be implemented as a multiple number of annular grooves.

FIGs. 15A to 15C presents an example in which the actuator 450 manipulates the lever 575 by applying currents between 0 and 2 amperes to each of the first coil 451 and second coil 452. the state depicted in FIG. 15A, the actuator 450 has applied a current of 2 amperes to the first coil 451 but has not applied a current to the second coil 452 (i.e., applied a current of 2 amperes as the first current and a current of 0 amperes as the second current). As a result, the magnet 465 has moved to a first position, which is the position closest to the second coil 452 side, and the valve rod 572 has moved to a corresponding position within the insertion channel 340. At this corresponding position, the valve opening channels 330 formed in the valve rod 572 are not aligned with the bypass channel 350, with not even a little overlap, and thus are blocked by the inner perimeter of the insertion channel 340. This state corresponds to the control valve 870 being completely closed, and since the valve opening channels 330 are not in communication with the bypass channel 350, the back-pressure chamber 300 can maintain a high pressure.

In the state depicted in FIG. 15B, the actuator 450 has applied a current of 2 amperes to the first coil 451 and also a current of 2 amperes to the second coil 452 (i.e., applied a current of 2 amperes as the first current and a current of 2 amperes as the second current). As a result, the magnet 465 has moved to a middle position between the first coil 451 and the second coil 452, and the valve rod 572 has moved to a corresponding position within the insertion channel 340. At this corresponding position, the valve opening channels 330 formed in the valve rod 572 partially overlap the bypass channel 350, so that about a half of the valve opening channels 330 are in communication with the bypass channel 350. This state corresponds to the control valve 570 being partially open, and since fluid can pass through the valve opening channels 330 and the bypass channel 350, the back-pressure chamber 300 can maintain a relatively lower pressure. In the state depicted in FIG. 15B, the actuator 450 can obtain the same results by applying currents of 1 ampere or of another value equally to the first and second coils 451, 452.

In the state depicted in FIG. 15C, the actuator 450 has not applied a current to the first coil 451 but has applied a current of 2 amperes to the second coil 452 (i.e., applied a current of 0 amperes as the first current and a current of 2 amperes as the second current). As a result, the magnet 465 has moved to a second position, which is the position closest to the first coil 451 side, and the valve rod 572 has moved to a corresponding position within the insertion channel 340. At this corresponding position, the valve opening channels 330 formed in the valve rod 572 are fully aligned with the bypass channel 350, and the area of overlap between the valve channels 330 and the bypass channel 350 is the greatest. This state corresponds to the control valve 570 being completely open, and the back-pressure chamber 300 can maintain the lowest pressure possible in the shock absorber 1000.

Similarly to the first disclosed embodiment described above, the actuator 450 does not necessarily have to apply currents of 0 or 2 amperes to the first and second coils 451, 452 and can apply currents of any value between 0 and 2 amperes, in response to which the first coil 451 and the second coil 452 can move the magnet 465 and the slide member (valve rod 572) correspondingly. The degree of opening of the control valve 870 can be adjusted according to the applied currents, and the number of levels can be more finely adjusted according to the number of valve opening channels 330 formed in the valve rod 572.

After the actuator 450 has moved the control valve 570 to a particular position, it is no longer necessary to keep applying currents to the first and second coils 451, 452. Even when the control valve 870 is in a partially open state, the flow of fluid does not apply a force that can move the valve rod 572, since the fluid flows in a direction that intersects the extending direction of the valve rod 572.

A generator-integrated variable-damping valve assembly 500, 800, 900 according to an embodiment of the invention can communicate with the outside using wireless communication, does not continuously consume power during its operation, and can charge the battery 410 by using the flow of fluid itself that is obtained during the use of the shock absorber 1000. Thus, the valve assembly 500, 800, 900 as well as the shock absorber 1000 equipped with the valve assembly can be very easily installed, as they occupy a very small volume of space and do not require connections to the control unit or the various sensors of the vehicle.

Also, whereas the related art requires welding a portion of the valve assembly 40 to a side surface of the shock absorber before assembling and installing the remaining parts, the small size associated with the valve assembly 500, 800, 900 according to an embodiment of the invention makes it possible to first assemble the valve assembly 500, 800, 900 and then couple the assembled valve assembly 500, 800, 900 to the designated position on the shock absorber 1000. This means that the manufacture and assembly of the shock absorber 1000 can be more easily automated, which in turn provides increased production yield and decreased defect rates.

A generator-integrated variable-damping valve assembly 500, 800, 900 according to an embodiment of the can protect the generator 480 or piezoelectric stack 485 from being subject to excessive forces, can increase the durability of the main valve body 530, and can increase the sealing performance of the back-pressure chamber 300. These features can prolong the life span and lower the maintenance costs of the valve assembly 500, 800, 900 as well as the shock absorber 1000 equipped with the valve assembly.

While the foregoing provides a description with reference to an embodiment of the present invention, it should be appreciated that a person having ordinary skill in the relevant field of art would be able to make various modifications and alterations to the present invention without departing from the scope of the present invention. The invention is defined by the appended claims.

## Claims

1. A generator-integrated variable-damping valve assembly for mounting on a shock absorber, the valve assembly comprising:
a housing (510) defining a valve chamber and a control chamber therein and including a partition wall (520) for separating the valve chamber from the control chamber, the valve chamber having an opening on one side thereof;
a main valve body (530) arranged within the valve chamber to partition a back-pressure chamber (300) on an other side of the valve chamber, the main valve body having an inlet channel (260) and an outlet channel (360) formed therein, the inlet channel and the outlet channel communicating with the back-pressure chamber;
a main disk spring (550) configured to be elastically deformable and arranged to cover the inlet channel, the main disk spring configured to open the inlet channel by being elastically deformed in accordance to a pressure difference between the inlet channel and the back-pressure chamber;
a back-pressure chamber body (560) arranged between the main valve body and the partition wall, the back-pressure chamber body having a bypass channel formed therein, the bypass channel (350) communicating with the back-pressure chamber;
a control valve (570) coupled to the back-pressure chamber body to control a degree of opening of the bypass channel;
a connector body (580) coupled to one side of the main valve body, the connector body having a portion thereof positioned at the opening to partition the opening into an inlet (110) and an outlet (130), the inlet communicating with the inlet channel and the outlet communicating with the outlet channel;
**characterised by** an impeller (600) arranged on one side of the main valve body and configured to be rotated by a flow of fluid;
a shaft (680) having one side thereof connected to the impeller and arranged to pass through a central hole formed in the main valve body and a through-hole formed in the partition wall;
a generator (480) arranged within the control chamber and coupled to an other side of the shaft, the generator configured to generate electricity by way of a rotation of the impeller; and
a control unit (400) including an actuator (450) for manipulating the control valve,
wherein the control unit is driven by power generated by the generator or by power provided from a battery charged by the generator.

2. The generator-integrated variable-damping valve assembly of claim 1, further comprising a guide (590) arranged on one side of the impeller and coupled to at least one of the housing, the main valve body, and the connector body, the guide configured to cause a fluid entering through the inlet to form a helical flow,
wherein the impeller is arranged on an inner side of the connector body, and the fluid entering through the inlet passes through the guide before passing through the impeller to rotate the impeller.

3. The generator-integrated variable-damping valve assembly of claim 2, wherein the one side of the shaft is supported by a bearing (592) mounted on the guide (590).

4. The generator-integrated variable-damping valve assembly of claim 1, further comprising a protective disk (540) coupled to the other side of the main valve body between the main valve body and the main disk spring and having a window (290) formed therein communicating with the inlet channel, wherein the main disk spring is configured to cover the inlet channel by covering the window.

5. The generator-integrated variable-damping valve assembly of claim 1, wherein a sealing rim protruding toward the back-pressure chamber body is formed on the other side of the main disc spring,
and wherein the sealing rim (522) maintains contact with the back-pressure chamber body even while the main disc spring is keeping the inlet channel open.

6. The generator-integrated variable-damping valve assembly of claim 1, wherein a central hole (284) formed in the main valve body has an inner diameter greater than an outer diameter of the shaft.

7. The generator-integrated variable-damping valve assembly of claim 1, wherein the actuator comprises:
an elongated slide member (460);
a first coil (451) wound around the slide member at one side of the slide member and configured to receive a first current;
a second coil (452) wound around the slide member at an other side of the slide member and configured to receive a second current; and
a magnet (465) coupled to the slide member at a position between the first coil and the second coil, the magnet coupled such that an N pole faces either one of the first coil and the second coil and an S pole faces another of the first coil and the second coil,
and wherein the control valve completely closes the bypass channel when the magnet is in a first position, completely opens the bypass channel when the magnet is in a second position, and partially opens the bypass channel when the magnet is between the first position and the second position, and
the control unit manipulates the control valve by controlling the first current and the second current applied respectively to the first coil and the second coil.

8. The generator-integrated variable-damping valve assembly of claim 7, wherein the control valve comprises:
a lever (575) coupled to the magnet; and
a valve rod (571) having a control valve channel (310) formed therein to form a shape of a hollow cylinder, the control valve channel communicating with the back-pressure chamber,
and wherein a valve opening (320) communicating with the control valve channel is formed in a particular position on an outer perimeter of the valve rod, the valve rod is coupled to at least one of the housing and the back-pressure chamber body so as to be rotatable about a rotation axis, the lever is formed at a position separated from the rotation axis such that the valve rod is rotated about the rotation axis by a movement of the magnet, and an area of overlap between the valve opening and the bypass channel is greatest when the magnet is at the second position.

9. The generator-integrated variable-damping valve assembly of claim 7, wherein an insertion channel is formed in the back-pressure chamber body, the insertion channel (340) extending in a direction intersecting the bypass channel,
the control valve further comprises a valve rod, the valve rod having an outer diameter corresponding to an inner diameter of the insertion channel and inserted into the insertion channel such that the valve rod is movable along an extending direction of the insertion channel, the valve rod integrated with the slide member (460),
a valve opening channel is formed in a particular position of the valve rod, the valve rod is moved within the insertion channel by a movement of the magnet, and an area of overlap between the insertion channel and the bypass channel is greatest when the magnet is at the second position.

10. The generator-integrated variable-damping valve assembly of claim 9, wherein the valve opening channel (330) is formed in an outer perimeter of the valve rod, an air channel (332) penetrating the valve rod along a lengthwise direction of the valve rod is formed within the valve rod, and the air channel does not communicate with the valve opening channel.

11. The generator-integrated variable-damping valve assembly of claim 1, further comprising an elastic member (730) elastically supporting the shaft such that the shaft is movable in relation to the housing along an extending direction of the shaft,
wherein the elastic member is configured to elastically deform and allow the shaft to move toward the other side when the fluid pressure of a fluid entering the inlet exceeds a predetermined threshold.

12. The generator-integrated variable-damping valve assembly of claim 11, wherein an inner side of the connector body is divided with respect to a curb (583) into a first diameter portion (581) and a second diameter portion (582), the first diameter portion having a first inner diameter and the second diameter portion having a second inner diameter greater than the first inner diameter,
the impeller has an outer diameter smaller than the second inner diameter, and
the impeller is position adjacent to the curb when a degree of elastic deformation of the elastic member does not exceed a predetermined threshold, and the impeller is positioned away from the curb when the degree of elastic deformation of the elastic member does exceed a predetermined threshold.

13. A digitally controlled shock absorber (1000) comprising the generator-integrated variable-damping valve assembly of any one of claim 1 to claim 12.

## Patentansprüche

1. Generatorintegrierte variable Dämpfungsventilanordnung zur Montage an einem Stoßdämpfer, wobei die Ventilanordnung Folgendes umfasst:
ein Gehäuse (510), das eine Ventilkammer und eine Steuerungskammer darin definiert und eine Trennwand (520) zum Trennen der Ventilkammer von der Steuerungskammer enthält, wobei die Ventilkammer an einer Seite davon eine Öffnung aufweist;
einen Hauptventilkörper (530), der innerhalb der Ventilkammer angeordnet ist, um eine Gegendruckkammer (300) an einer anderen Seite der Ventilkammer abzutrennen, wobei der Hauptventilkörper einen Einlasskanal (260) und einen Auslasskanal (360) darin ausgebildet hat, wobei der Einlasskanal und der Auslasskanal mit der Gegendruckkammer in Verbindung stehen;
eine Hauptscheibenfeder (550), die so konfiguriert ist, dass sie elastisch verformbar ist, und so angeordnet ist, dass sie den Einlasskanal abdeckt, wobei die Hauptscheibenfeder so konfiguriert ist, dass sie den Einlasskanal durch elastische Verformung entsprechend einem Druckunterschied zwischen dem Einlasskanal und der Gegendruckkammer öffnet;
einen Gegendruckkammerkörper (560), der zwischen dem Hauptventilkörper und der Trennwand angeordnet ist, wobei der Gegendruckkammerkörper einen darin ausgebildeten Bypass-Kanal aufweist, wobei der Bypass-Kanal (350) mit der Gegendruckkammer in Verbindung steht;
ein Steuerungsventil (570), das mit dem Gegendruckkammerkörper gekoppelt ist, um einen Öffnungsgrad des Bypass-Kanals zu steuern;
einen Verbindungskörper (580), der mit einer Seite des Hauptventilkörpers gekoppelt ist, wobei ein Teil des Verbindungskörpers an der Öffnung so angeordnet ist, dass er die Öffnung in einen Einlass (110) und einen Auslass (130) unterteilt, wobei der Einlass mit dem Einlasskanal in Verbindung steht und der Auslass mit dem Auslasskanal in Verbindung steht;
**gekennzeichnet durch** ein Laufrad (600), das an einer Seite des Hauptventilkörpers angeordnet und so konfiguriert ist, dass es durch einen Flüssigkeitsstrom gedreht wird;
eine Welle (680), deren eine Seite mit dem Laufrad verbunden ist und die so angeordnet ist, dass sie durch ein in dem Hauptventilkörper ausgebildetes Mittelloch und ein in der Trennwand ausgebildetes Durchgangsloch verläuft;
einen Generator (480), der innerhalb der Steuerungskammer angeordnet und mit einer anderen Seite der Welle gekoppelt ist, wobei der Generator so konfiguriert ist, dass er durch eine Drehung des Laufrads Strom erzeugt; und
eine Steuerungseinheit (400), die einen Aktuator (450) zur Betätigung des Steuerungsventils enthält,
wobei die Steuerungseinheit mit der von dem Generator erzeugten Energie oder mit einer von dem Generator geladenen Batterie bereitgestellten Energie angetrieben wird.

2. Generatorintegrierte variable Dämpfungsventilanordnung nach Anspruch 1, die ferner eine Führung (590) umfasst, die an einer Seite des Laufrads angeordnet ist und mit dem Gehäuse, dem Hauptventilkörper und/oder dem Verbindungskörper gekoppelt ist, wobei die Führung so konfiguriert ist, dass sie bewirkt, dass eine durch den Einlass eintretende Flüssigkeit eine spiralförmige Strömung bildet,
wobei das Laufrad an einer Innenseite des Verbindungskörpers angeordnet ist und die durch den Einlass eintretende Flüssigkeit durch die Führung fließt, bevor sie durch das Laufrad fließt, um das Laufrad zu drehen.

3. Generatorintegrierte variable Dämpfungsventilanordnung nach Anspruch 2, wobei die eine Seite der Welle von einem auf der Führung (590) montierten Lager (592) gestützt wird.

4. Generatorintegrierte variable Dämpfungsventilanordnung nach Anspruch 1, die ferner eine Schutzscheibe (540) umfasst, die mit der anderen Seite des Hauptventilkörpers zwischen dem Hauptventilkörper und der Hauptscheibenfeder gekoppelt ist und ein darin ausgebildetes Fenster (290) aufweist, das mit dem Einlasskanal in Verbindung steht,
wobei die Hauptscheibenfeder so konfiguriert ist, dass sie den Einlasskanal durch Abdecken des Fensters abdeckt.

5. Generatorintegrierte variable Dämpfungsventilanordnung nach Anspruch 1, wobei an der anderen Seite der Hauptscheibenfeder ein Dichtrand ausgebildet ist, der in Richtung des Gegendruckkammerkörpers vorsteht,
und wobei der Dichtrand (522) auch dann die Verbindung mit dem Gegendruckkammerkörper aufrechterhält, wenn die Hauptscheibenfeder den Einlasskanal offenhält.

6. Generatorintegrierte variable Dämpfungsventilanordnung nach Anspruch 1, wobei ein in dem Hauptventilkörper ausgebildetes Mittelloch (284) einen Innendurchmesser aufweist, der größer als ein Außendurchmesser der Welle ist.

7. Generatorintegrierte variable Dämpfungsventilanordnung nach Anspruch 1, wobei der Aktuator Folgendes umfasst:
ein längliches Gleitelement (460);
eine erste Spule (451), die an einer Seite des Gleitelements um das Gleitelement gewickelt und so konfiguriert ist, dass sie einen ersten Strom aufnimmt;
eine zweite Spule (452), die an einer anderen Seite des Gleitelements um das Gleitelement gewickelt und so konfiguriert ist, dass sie einen zweiten Strom aufnimmt; und
einen Magneten (465), der an einer Position zwischen der ersten Spule und der zweiten Spule mit dem Gleitelement gekoppelt ist, wobei der Magnet so gekoppelt ist, dass ein N-Pol entweder der ersten Spule oder der zweiten Spule zugewandt ist und ein S-Pol einer anderen der ersten Spule und der zweiten Spule zugewandt ist,
und wobei das Steuerungsventil den Bypass-Kanal vollständig schließt, wenn sich der Magnet in einer ersten Position befindet, den Bypass-Kanal vollständig öffnet, wenn sich der Magnet in einer zweiten Position befindet, und den Bypass-Kanal teilweise öffnet, wenn sich der Magnet zwischen der ersten Position und der zweiten Position befindet, und
wobei die Steuerungseinheit das Steuerungsventil durch Steuern des ersten Stroms und des zweiten Stroms betätigt, die jeweils an die erste Spule und die zweite Spule angelegt werden.

8. Generatorintegrierte variable Dämpfungsventilanordnung nach Anspruch 7, wobei das Steuerungsventil Folgendes umfasst:
einen Hebel (575), der mit dem Magneten gekoppelt ist; und
eine Ventilstange (571) mit einem darin ausgebildeten Steuerungsventilkanal (310) in Form eines Hohlzylinders, wobei der Steuerungsventilkanal mit der Gegendruckkammer in Verbindung steht,
und wobei eine Ventilöffnung (320), die mit dem Steuerungsventilkanal in Verbindung steht, an einer bestimmten Position an einem Außenumfang der Ventilstange ausgebildet ist, wobei die Ventilstange mit dem Gehäuse und/oder dem Gegendruckkammerkörper so gekoppelt ist, dass sie um eine Drehachse drehbar ist, wobei der Hebel an einer von der Drehachse getrennten Position so ausgebildet ist, dass die Ventilstange durch eine Bewegung des Magneten um die Drehachse gedreht wird, und wobei ein Überlappungsbereich zwischen der Ventilöffnung und dem Bypass-Kanal am größten ist, wenn sich der Magnet in der zweiten Position befindet.

9. Generatorintegrierte variable Dämpfungsventilanordnung nach Anspruch 7, wobei ein Einführkanal in dem Gegendruckkammerkörper ausgebildet ist, wobei sich der Einführkanal (340) in einer Richtung erstreckt, die den Bypass-Kanal schneidet,
wobei das Steuerungsventil ferner eine Ventilstange umfasst, wobei die Ventilstange einen Außendurchmesser aufweist, der einem Innendurchmesser des Einführkanals entspricht, und so in den Einführkanal eingesetzt ist, dass die Ventilstange entlang einer Ausdehnungsrichtung des Einführkanals bewegbar ist, wobei die Ventilstange in das Gleitelement (460) integriert ist,
wobei ein Ventilöffnungskanal an einer bestimmten Position der Ventilstange ausgebildet ist, wobei die Ventilstange durch eine Bewegung des Magneten innerhalb des Einführkanals bewegt wird und ein Überlappungsbereich zwischen dem Einführkanal und dem Bypass-Kanal am größten ist, wenn sich der Magnet in der zweiten Position befindet.

10. Generatorintegrierte variable Dämpfungsventilanordnung nach Anspruch 9, wobei der Ventilöffnungskanal (330) in einem Außenumfang der Ventilstange ausgebildet ist, wobei ein Luftkanal (332), der die Ventilstange in Längsrichtung durchdringt, innerhalb der Ventilstange ausgebildet ist und der Luftkanal nicht mit dem Ventilöffnungskanal in Verbindung steht.

11. Generatorintegrierte variable Dämpfungsventilanordnung nach Anspruch 1, die ferner ein elastisches Element (730) umfasst, das die Welle elastisch so stützt, dass die Welle in Bezug auf das Gehäuse entlang einer Ausdehnungsrichtung der Welle bewegbar ist,
wobei das elastische Element so konfiguriert ist, dass es sich elastisch verformt und der Welle ermöglicht, sich in Richtung der anderen Seite zu bewegen, wenn der Flüssigkeitsdruck einer in den Einlass eintretenden Flüssigkeit einen vorbestimmten Schwellenwert überschreitet.

12. Generatorintegrierte variable Dämpfungsventilanordnung nach Anspruch 11, wobei eine Innenseite des Verbindungskörpers in Bezug auf einen Rand (583) in einen ersten Durchmesserabschnitt (581) und einen zweiten Durchmesserabschnitt (582) unterteilt ist,
wobei der erste Durchmesser einen ersten Innendurchmesser aufweist und der zweite Durchmesser einen zweiten Innendurchmesser aufweist, der größer als der erste Innendurchmesser ist,
wobei das Laufrad einen Außendurchmesser aufweist, der kleiner als der zweite Innendurchmesser ist, und
wobei sich das Laufrad neben dem Rand befindet, wenn ein Grad der elastischen Verformung des elastischen Elements einen vorbestimmten Schwellenwert nicht überschreitet, und wobei sich das Laufrad entfernt von dem Rand befindet, wenn der Grad der elastischen Verformung des elastischen Elements einen vorbestimmten Schwellenwert überschreitet.

13. Digital gesteuerter Stoßdämpfer (1000), der die generatorintegrierte variable Dämpfungsventilanordnung nach einem der Ansprüche 1 bis 12 umfasst.

## Revendications

1. Ensemble soupape à amortissement variable intégrée au générateur destiné à être monté sur un amortisseur, l'ensemble de soupape comprenant :
un boîtier (510) définissant à l'intérieur une chambre de soupape et une chambre de commande, et incluant une paroi de séparation (520) pour séparer la chambre de soupape de la chambre de commande, la chambre de soupape ayant une ouverture sur l'un de ses côtés ;
un corps de la soupape principale (530) disposé à l'intérieur de la chambre de soupape pour séparer une chambre de contre-pression (300) sur un autre côté de la chambre de soupape, le corps de la soupape principale ayant un canal d'entrée (260) et un canal de sortie (360) y formés, le canal d'entrée et le canal de sortie communiquant avec la chambre de contre-pression ;
un ressort à disque principal (550) configuré pour être élastiquement déformable et disposé de manière à recouvrir le canal d'entrée, le ressort à disque principal étant configuré pour ouvrir le canal d'entrée en se déformant élastiquement en fonction d'une différence de pression entre le canal d'entrée et la chambre de contre-pression ;
un corps de la chambre de contre-pression (560) disposé entre le corps de la soupape principale et la paroi de séparation, le corps de la chambre de contre-pression ayant un canal de dérivation y formé, le canal de dérivation (350) communiquant avec la chambre de contre-pression ;
une soupape de commande (570) couplée au corps de la chambre de contre-pression pour commander un degré d'ouverture du canal de dérivation ;
un corps de raccordement (580) couplé à un côté du corps de la soupape principale, le corps de raccordement ayant une portion de celui-ci positionnée au niveau de l'ouverture afin de séparer l'ouverture en une entrée (110) et une sortie (130), l'entrée communiquant avec le canal d'entrée et la sortie communiquant avec le canal de sortie ;
**caractérisé par** un rotor (600) disposé sur un côté du corps de la soupape principale et configuré pour être mis en rotation par un écoulement de fluide ;
un arbre (680) ayant un côté de celui-ci relié au rotor et disposé pour traverser un trou central formé dans le corps de la soupape principale et un trou traversant formé dans la paroi de séparation ;
un générateur (480) disposé dans la chambre de commande et couplé à un autre côté de l'arbre, le générateur étant configuré pour produire de l'électricité par rotation du rotor ; et
une unité de commande (400) incluant un actionneur (450) pour actionner la soupape de commande,
où l'unité de contrôle est entrainée par l'énergie générée par le générateur ou par l'énergie fournie par une batterie chargée par le générateur.

2. Ensemble soupape à amortissement variable intégrée au générateur selon la revendication 1, comprenant en outre un guide (590) disposé d'un côté du rotor et couplé à au moins l'un des éléments suivants : le boîtier, le corps de la soupape principale, et le corps de raccordement, le guide étant configuré pour induire qu'un fluide entrant par l'entrée forme un flux hélicoïdal,
où le rotor est disposé sur un côté intérieur du corps de raccordement, et le fluide entrant par l'entrée traverse le guide avant de traverser le rotor pour faire tourner le rotor.

3. Ensemble soupape à amortissement variable intégrée au générateur selon la revendication 2, où l'un côté de l'arbre est supporté par un palier (592) monté sur le guide (590).

4. Ensemble soupape à amortissement variable intégrée au générateur selon la revendication 1, comprenant en outre un disque de protection (540) couplé à l'autre côté du corps de la soupape principale entre le corps de la soupape principale et le ressort à disque principal et ayant une fenêtre (290) y formée communiquant avec le canal d'entrée,
où le ressort à disque principal est configuré pour recouvrir le canal d'entrée en recouvrant la fenêtre.

5. Ensemble soupape à amortissement variable intégrée au générateur selon la revendication 1, où un rebord d'étanchéité faisant saillie vers le corps de la chambre de contre-pression est formé sur l'autre côté du ressort à disque principal,
et où le rebord d'étanchéité (522) maintient le contact avec le corps de la chambre de contre-pression même lorsque le ressort à disque principal garde le canal d'entrée ouvert.

6. Ensemble soupape à amortissement variable intégrée au générateur selon la revendication 1, où un trou central (284) formé dans le corps de la soupape principale a un diamètre intérieur supérieur à un diamètre extérieur de l'arbre.

7. Ensemble soupape à amortissement variable intégrée au générateur selon la revendication 1, où l'actionneur comprend :
un élément coulissant allongé (460) ;
une première bobine (451) enroulée autour de l'élément coulissant au niveau d'un côté de l'élément coulissant et configurée pour recevoir un premier courant ;
une deuxième bobine (452) enroulée autour de l'élément coulissant au niveau d'un autre côté de l'élément coulissant et configurée pour recevoir un deuxième courant ; et
un aimant (465) couplé à l'élément coulissant au niveau d'une position entre la première bobine et la deuxième bobine, l'aimant étant couplé de sorte qu'un pôle N fait face à l'une des bobines, soit la première soit la deuxième, et un pôle S fait face à l'autre des bobines, soit la première soit la deuxième,
et où la soupape de commande ferme complètement le canal de dérivation lorsque l'aimant se trouve dans une première position, ouvre complètement le canal de dérivation lorsque l'aimant se trouve dans une deuxième position, et ouvre partiellement le canal de dérivation lorsque l'aimant se trouve entre la première position et la deuxième position, et
l'unité de commande actionne la soupape de commande en régulant le premier courant et le deuxième courant appliqués respectivement à la première bobine et la deuxième bobine.

8. Ensemble soupape à amortissement variable intégrée au générateur selon la revendication 7, où la soupape de commande comprend :
un levier (575) couplé à l'aimant ; et
une tige de soupape (571) ayant un canal de soupape de commande (310) y formé pour former une forme d'un cylindre creux, le canal de soupape de commande communiquant avec la chambre de contre-pression,
et où une ouverture de soupape (320) communiquant avec le canal de soupape de commande est formée dans une position particulière sur un périmètre extérieur de la tige de soupape, la tige de soupape est couplée à au moins l'un du boîtier et du corps de la chambre de contre-pression de manière à pouvoir tourner autour d'un axe de rotation, le levier est formé au niveau d'une position séparée de l'axe de rotation de sorte que la tige de soupape est mise en rotation autour de l'axe de rotation par un mouvement de l'aimant, et une zone de chevauchement entre l'ouverture de la soupape et le canal de dérivation est maximale lorsque l'aimant est au niveau de la deuxième position.

9. Ensemble soupape à amortissement variable intégrée au générateur selon la revendication 7, où un canal d'insertion est formé dans le corps de la chambre de contre-pression, le canal d'insertion (340) s'étendant dans une direction entrecoupant le canal de dérivation,
la soupape de commande comprend en outre une tige de soupape, la tige de soupape ayant un diamètre extérieur correspondant à un diamètre intérieur du canal d'insertion et étant insérée dans le canal d'insertion de sorte que la tige de soupape est mobile le long d'une direction d'extension du canal d'insertion, la tige de soupape étant intégrée à l'élément coulissant (460),
un canal d'ouverture de soupape est formé dans une position particulière de la tige de soupape, la tige de soupape est déplacée à l'intérieur du canal d'insertion par un mouvement de l'aimant, et une zone de chevauchement entre le canal d'insertion et le canal de dérivation est maximale lorsque l'aimant se trouve au niveau de la deuxième position.

10. Ensemble soupape à amortissement variable intégrée au générateur selon la revendication 9, où le canal d'ouverture de soupape (330) est formé dans un périmètre extérieur de la tige de soupape, un canal d'air (332) pénétrant la tige de soupape dans le sens longitudinal de la tige de soupape est formé à l'intérieur de la tige de soupape, et le canal d'air ne communique pas avec le canal d'ouverture de soupape.

11. Ensemble soupape à amortissement variable intégrée au générateur selon la revendication 1, comprenant en outre un élément élastique (730) supportant élastiquement l'arbre de sorte que l'arbre est mobile par rapport au boîtier le long d'une direction d'extension de l'arbre,
où l'élément élastique est configuré pour se déformer élastiquement et permettre à l'arbre de se déplacer vers l'autre côté lorsque la pression de fluide d'un fluide entrant par l'entrée dépasse un seuil prédéterminé.

12. Ensemble soupape à amortissement variable intégrée au générateur selon la revendication 11, où un côté intérieur du corps de raccordement est divisé par rapport à un épaulement (583) en une portion de premier diamètre (581) et une portion de deuxième diamètre (582),
la portion de premier diamètre ayant un premier diamètre intérieur et la portion de deuxième diamètre ayant un deuxième diamètre intérieur supérieur au premier diamètre intérieur,
le rotor a un diamètre extérieur inférieur au deuxième diamètre intérieur, et
le rotor est positionné de façon adjacente à l'épaulement lorsqu'un degré de déformation élastique de l'élément élastique ne dépasse pas un seuil prédéterminé, et le rotor est positionné à l'écart de l'épaulement lorsque le degré de déformation élastique de l'élément élastique dépasse un seuil prédéterminé.

13. Amortisseur à commande numérique (1000) comprenant l'ensemble soupape à amortissement variable intégrée au générateur selon l'une quelconque des revendications 1 à 12.
